(19) **Europäisches Patentamt**
**European Patent Office**
**Office européen des brevets**

(11) **EP 1 837 359 B1**

(12) **EUROPEAN PATENT SPECIFICATION**

(45) Date of publication and mention
of the grant of the patent:
**17.07.2013 Bulletin 2013/29**

(51) Int Cl.:
***C08G 75/02*** *(2006.01)* ***C08G 75/14*** *(2006.01)*

(21) Application number: **05819451.5**

(86) International application number:
**PCT/JP2005/023433**

(22) Date of filing: **15.12.2005**

(87) International publication number:
**WO 2006/068159 (29.06.2006 Gazette 2006/26)**

(54) **BRANCHED POLYARYLENE SULFIDE RESIN, PROCESS FOR PRODUCING THE SAME, AND USE THEREOF AS POLYMERIC MODIFIER**

VERZWEIGTES POLYARYLENSULFIDHARZ, HERSTELLUNGSVERFAHREN DAFÜR UND VERWENDUNG DAVON ALS POLYMERMODIFIZIERUNGSMITTEL

RESINE DE POLYSULFURE D'ARYLENE RAMIFIE, PROCEDE SERVANT A PRODUIRE CELUI-CI ET UTILISATION DE CELUI-CI COMME ADJUVANT POLYMERIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2004 JP 2004368837**

(43) Date of publication of application:
**26.09.2007 Bulletin 2007/39**

(73) Proprietor: **Kureha Corporation**
**Tokyo 103-8552 (JP)**

(72) Inventors:
• **SUZUKI, Koichi,**
**c/o Iwaki Factory, Kureha Corp.**
**Iwaki-shi, Fukushima 974-8686 (JP)**

• **SATO, Hiroyuki,**
**Research Center, Kureha Corp.**
**Iwaki-shi, Fukushima 9748686 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**JP-A- 09 087 518** **JP-A- 11 158 280**
**JP-A- 2002 212 292** **JP-A- 2003 096 190**
**JP-A- 2003 105 087** **US-A- 4 956 499**
**US-A- 5 200 500** **US-A- 5 268 451**

**Description**

TECHNICAL FIELD

The present invention relates to a branched poly(arylene sulfide) resin and a production process thereof. More particularly, the production invention relates to a branched poly(arylene sulfide) resin, by which the occurrence of burr is markedly inhibited, and molded products free of surface defects such as small depressions and hard spots can be provided, and a production process thereof. The present invention also relates to use of the branched poly(arylene sulfide) resin as a polymeric modifier.

In the present invention, a branched poly(arylene sulfide) resin means a poly(arylene sulfide) resin into which a branched structure has been introduced by polymerization.

In the present invention, a sulfur source in a charging step is referred to as "a charged sulfur source" or "an available sulfur source" for distinguishing it from a sulfur source charged into a reaction vessel in a dehydration step. The reason for it is that the amount of the sulfur source charged into the reaction vessel in the dehydration step is varied by a dehydration treatment under heat. The charged sulfur source is consumed by a reaction with a dihalo-aromatic compound and a polyhalo-aromatic compound in a polymerization step. However, molar ratios to other components are defined on the basis of a molar amount of the charged sulfur source in the charging step.

BACKGROUND ART

Poly(arylene sulfide) resins (hereinafter abbreviated as "PAS resins") represented by a poly(phenylene sulfide) resin (hereinafter abbreviated as "PPS resin") are engineering plastics excellent in heat resistance, chemical resistance, flame retardancy, mechanical strength, electrical properties, dimensional stability and the like. The PAS resins are commonly used as materials for resin parts in a wide variety of fields such as electrical and electronic equipments, automotive equipments and chemical equipments because they can be molded or formed into various kinds of molded products, films, sheets, fibers, etc., by general melt processing processes such as injection, molding, extrusion and compression molding.

As a typical production process of a PAS resin, is known a process in which a sulfur source and a dihalo-aromatic compound are subjected to a polymerization reaction in an organic amide solvent such as N-methyl-2-pyrrolidone (hereinafter abbreviated as "NMP"). However, the PAS resin has a defect that the amount of burr produced upon injection molding is great. The burr means portions of a molding material, which have flown out in interstices of a mold and solidified. Burr solidified in the form of a thin film or flake requires to be removed in a finishing step.

A process, in which a branched PAS resin is blended with a straight-chain PAS resin, has been proposed for inhibiting the occurrence of burr upon injection molding. In addition, some proposals have been made on a production process of the branched PAS resin. However, the conventional processes are difficult to cope with a high requirement level in recent years.

A PAS resin composition obtained by blending a crosslinked PAS resin having a melt viscosity of $5 \times 10^5$ to $1 \times 10^9$ P ($5 \times 10^4$ to $1 \times 10^8$ Pa·s) as measured at a temperature of 310°C and a shear rate of 5 sec$^{-1}$ and exhibiting a gel form upon melting with an uncrosslinked and substantially linear straight-chain PAS resin, and improved in burr property (burr-inhibiting tendency) has heretofore been proposed in Japanese Patent Application Laid-Open No. 64-9266 (corresponding to U.S. Patent No. 4,956,499).

Japanese Patent Application Laid-Open No. 64-9266 shows an Experimental Example in which a crosslinked PAS resin was produced by a process including polymerizing an alkali metal sulfide, a dihalo-aromatic compound and a polyhalo-aromatic compound having 3 or more halogen substituents in an amide solvent by two stages. More specifically, the crosslinked PAS resin is produced by a two-stage polymerization process including reacting sodium sulfide, p-dichlorobenzene and 1,2,4,5-tetrachlorobenzene in NMP, and then adding water and raising the temperature to continue the polymerization reaction. However, the crosslinked PAS resin obtained by this production process is a mixture of a small amount of a granular product and a great amount of a bulky product (see "Polymer Preparation Example B-1" in this article). A resin composition with such a crosslinked PAS resin blended with a straight-chain PAS resin is poor in molding and processing ability, and the surface properties of a molded product obtained therefrom are also poor.

A process for producing an alkali metal sulfide, a dihalo-aromatic compound and a polyhalo-aromatic compound having 3 or more halogen substituents in an organic amide solvent by an improved two-stage polymerization process has been proposed in Japanese Patent Application Laid-Open No. 1-299826 (corresponding to U.S. Patent Nos. 5,200,500 and 5,268,451).

Japanese Patent Application Laid-Open No. 1-299826 discloses a process including reacting, in a first-stage polymerization step, the alkali metal sulfide, dihalo-aromatic compound and polyhalo-aromatic compound in a state that water is present in a proportion of 0.5 to 2.9 mol per mol of a charged alkali metal sulfide in the organic amide solvent, and controlling, in a second-stage polymerization step, the amount of water in such a manner that water is present in a proportion of 2.5 to 7 mol per mol of the charged alkali metal sulfide and raising the temperature to continue the polymerization reaction.

According to the production process disclosed in Japanese Patent Application Laid-Open No. 1-299826, a highly crosslinked PAS resin can be obtained in the form of granules without forming a bulky product. However, when the alkali metal sulfide, dihalo-aromatic compound and polyhalo-aromatic compound are reacted from the beginning of the polymerization, a branched PAS resin having a too high melt viscosity is easy to be provided. When the branched PAS resin having a too high melt viscosity is blended with a straight-chain PAS resin, defects such as hard spots (small depressions) occur in a molded product to deteriorate its surface properties, and moreover the inhibitory effect on the occurrence of burr is also insufficient.

On the other hand, when the polymerization time in the second-stage polymerization step in the production process described in Japanese Patent Application Laid-Open No. 1-299826 is markedly shortened, a branched PAS resin having a low melt viscosity can be obtained. However, the branched PAS resin having a low melt viscosity obtained by such a process has great melt viscoelasticity tan $\delta$, and the inhibitory effect on the occurrence of burr is poor even when it is blended with the straight-chain PAS resin, so that the surface properties of the resulting molded product are deteriorated.

DISCLOSURE OF THE INVENTION

It is an object of the present invention to provide a branched poly(arylene sulfide) resin, which can markedly inhibit the occurrence of burr and provide molded products excellent in surface properties when blended as a polymeric modifier with a thermoplastic resin such as a straight-chain poly(arylene sulfide) resin, and a production process thereof.

Another object of the present invention is to provide use of the branched poly(arylene sulfide) resin having such excellent properties as a polymeric modifier.

The present inventors have thought that the reason why the inhibitory effect on the occurrence of burr is insufficient, and the surface properties of the resulting molded product are also not sufficiently satisfactory when a conventional branched PAS resin is used as a polymeric modifier is that the production process of the branched PAS resin involves a problem.

In the conventional production process, is adopted a process including subjecting a sulfur source, a dihalo-aromatic compound and a polyhalo-aromatic compound having 3 or more halogen substituents to a polymerization reaction from the beginning of the polymerization. It has been found that according to such a production process, it is difficult to control the physical properties of the resulting branched PAS resin, such as melt viscosity and average particle diameter within respective desired ranges even when polymerization conditions are devised.

Thus, the present inventors have carried out an extensive investigation. As a result, the inventors have conceived of a process including reacting a sulfur source and a dihalo-aromatic compound in an organic amide solvent and adding a polyhalo-aromatic compound having 3 or more halogen substituents in a predetermined proportion to the polymerization reaction mixture at the point of time the conversion of the dihalo-aromatic compound have become sufficiently high. The polymerization reaction mixture, to which the polyhalo-aromatic compound has been added, is heated at a predetermined heating rate, and the polymerization reaction is continued at a high temperature in the presence of a phase separation agent.

According to the production process of the present invention, a branched PAS resin having a melt viscosity suitable for use as a polymeric modifier such as an inhibitor of the occurrence of burr can be obtained in the form of granules. According to the production process of the present invention, the melt viscoelasticity tan $\delta$ of the resulting branched PAS resin can be controlled within a range suitable for use as the inhibitor of the occurrence of burr.

In other words, according to the results of researches by the present inventors, it has been found that all the melt viscosity, average particle diameter and melt viscoelasticity tan $\delta$ of a branched PAS resin fall within respective proper ranges, whereby such a branched PAS resin exhibits a markedly excellent effect as an inhibitor of the occurrence of burr when the branched PAS resin is blended with, for example, a straight-chain PAS resin, and the surface properties of the resulting molded product are improved. According to the present invention, the branched PAS resin having such excellent properties can be obtained. The present invention has been led to completion on the basis of these findings.

According to the present invention, there is thus provided a process for producing a branched poly(arylene sulfide) resin by polymerizing a sulfur source and a dihalo-aromatic compound in the presence of a polyhalo-aromatic compound having 3 or more halogen substituents in its molecule in an organic amide solvent, the process comprising subjecting the sulfur source and the dihalo-aromatic compound to a polymerization reaction at a temperature of 170 to 270°C in the organic amide solvent, adding the polyhalo-aromatic compound in an amount of 0.010 to 0.100 mol per mol of the sulfur source, and a phase separation agent to the resultant polymerization reaction mixture at the point of time the conversion of the dihalo-aromatic compound has reached at least 80%, then heating the polymerization reaction mixture at a heating rate of 10 to 60°C/hour to raise the temperature of the mixture to at least 240°C, and continuing the polymerization reaction at a temperature of 240 to 290°C.

According to a particularly preferable aspect of the present invention, there is provided a process for producing a branched poly(arylene sulfide) resin by polymerizing a sulfur source and a dihalo-aromatic compound in the presence of a polyhalo-aromatic compound having 3 or more halogen substituents in its molecule in an organic amide solvent, the process comprising the following Steps 1 to 5:

(1) Dehydration Step 1 of heating a mixture containing the organic amide solvent, the sulfur source including an alkali metal hydrosulfide, and an alkali metal hydroxide to discharge at least a part of a distillate containing water from the interior of the system containing the mixture to the exterior of the system;
(2) Charging Step 2 of mixing the mixture remaining in the system after the dehydration step with the dihalo-aromatic compound to prepare a charging mixture containing the organic amide solvent, the sulfur source (hereinafter referred to as "charged sulfur source"), the alkali metal hydroxide, water and the dihalo-aromatic compound;
(3) First-Stage Polymerization Step 3 of heating the charging mixture to a temperature of 170 to 270°C, thereby subjecting the sulfur source and the dihalo-aromatic compound to a polymerization reaction in the organic amide solvent containing water, and adding the polyhalo-aromatic compound in an amount of 0.010 to 0.100 mol per mol of the charged sulfur source, and a phase separation agent to the resultant polymerization reaction mixture at the point of time the conversion of the dihalo-aromatic compound has reached at least 80%;
(4) Heating Step 4 of heating the polymerization reaction mixture at a heating rate of 10 to 60°C/hour to raise the temperature of the mixture to at least 240°C; and
(5) Second-Stage Polymerization Step 5 of continuing the polymerization reaction at a temperature of 240 to 290°C.

According to the present invention, there is also provided a branched poly(arylene sulfide) resin having the following properties i to iii:

i) a melt viscosity of 10.0 x 10$^4$ to 40.0 x 10$^4$ Pa·s as measured at a temperature of 330°C and a shear rate of 2 sec$^{-1}$;
ii) an average particle diameter of 50 to 2,000 $\mu$m; and iii) a melt viscoelasticity tan $\delta$ of 0.10 to 0.30 as measured at a temperature of 310°C and an angular velocity of 1 rad/sec.

According to the present invention, there is further provided use of the branched poly(arylene sulfide) resin as a polymeric modifier.

BEST MODE FOR CARRYING OUT THE INVENTION

1. Sulfur source:

In the present invention, an alkali metal sulfide, an alkali metal hydrosulfide or a mixture thereof is used as a sulfur source. Hydrogen sulfide may also be used as a sulfur source. More specifically, when an alkali metal hydroxide (for example, NaOH) is present in excess in a reaction vessel after the dehydration step, hydrogen sulfide is blown into the reaction vessel, whereby an alkali metal sulfide (for example, Na$_2$S) can be formed.

An alkali metal hydrosulfide or a sulfur source containing the alkali metal hydrosulfide as a main component is preferred as the sulfur source. As examples of the alkali metal hydrosulfide, may be mentioned lithium hydrosulfide, sodium hydrosulfide, potassium hydrosulfide, rubidium hydrosulfide, cesium hydrosulfide and mixtures of two or more compounds thereof. However, the alkali metal hydrosulfide is not limited thereto. The alkali metal hydrosulfide may be used in any form of an anhydride, a hydrate and an aqueous solution. Among these, sodium hydrosulfide and lithium hydrosulfide are preferred in that they are industrially available on the cheap. The alkali metal hydrosulfide is preferably used as an aqueous mixture (i.e., a mixture with water having fluidity) such as an aqueous solution from the viewpoints of processing operation, metering, etc.

In general, a small amount of an alkali metal sulfide is secondarily produced in a production process of the alkali metal hydrosulfide. A small amount of the alkali metal sulfide may be contained in the alkali metal hydrosulfide used in the present invention. The alkali metal hydrosulfide tends to become a stable state when it contains a small amount of the alkali metal sulfide.

When the mixture of the alkali metal hydrosulfide and the alkali metal sulfide is used as the sulfur source, thus, the mixture is preferably a mixture including the alkali metal hydrosulfide as a main component, more preferably a mixture containing more than 50 mol% of the alkali metal hydrosulfide and less than 50 mol% of the alkali metal sulfide. When the sulfur source is a mixture of the alkali metal hydrosulfide and the alkali metal sulfide, the composition thereof is preferably composed of 70 to 99.5 mol% of the alkali metal hydrosulfide and 0.5 to 30 mol% of the alkali metal sulfide, more preferably 90 to 99.5 mol% of the alkali metal hydrosulfide and 0.5 to 10 mol% of the alkali metal sulfide, still more preferably 95 to 99.5 mol% of the alkali metal hydrosulfide and 0.5 to 5 mol% of the alkali metal sulfide, particularly preferably 97 to 99.5 mol% of the alkali metal hydrosulfide and 0.5 to 3 mol% of the alkali metal hydroxide from the viewpoint of stability of the polymerization reaction system.

When the sulfur source is a mixture of the alkali metal hydrosulfide and the alkali metal sulfide, the total molar quantity of the alkali metal hydrosulfide and the alkali metal sulfide becomes a molar quantity of the charged sulfur source (may be referred to as "available sulfur source"). When a dehydration step is arranged prior to the charging step, this total molar quantity becomes a molar quantity of the charged sulfur source after the dehydration step.

As examples of the alkali metal sulfide, may be mentioned lithium sulfide, sodium sulfide, potassium sulfide, rubidium sulfide, cesium sulfide and mixtures of two or more compounds thereof. However, the alkali metal sulfide is not limited thereto. The alkali metal sulfide may be used in any form of an anhydride, a hydrate and an aqueous solution. Among these, sodium sulfide is preferred in that it is industrially available on the cheap and easy to handle.

As these alkali metal sulfides, may also be used those generally marketed in the form of a hydrate in addition to those contained in alkali metal hydrosulfides as by-products. Examples of the hydrate of the alkali metal sulfide include sodium sulfide nonahydrate ($Na_2S \cdot 9H_2O$) and sodium sulfide pentahydrate ($Na_2S \cdot 5H_2O$). The alkali metal sulfide is preferably used as an aqueous mixture (i.e., a mixture with water having fluidity) such as an aqueous solution from the viewpoints of processing operation, metering, etc.

2. Alkali metal hydroxide:

In the production process according to the present invention, a process including polymerizing a sulfur source containing an alkali metal hydrosulfide and a dihalo-aromatic compound in the presence of an alkali metal hydroxide in an organic amide solvent containing water is preferably adopted.

Examples of the alkali metal hydroxide include lithium hydroxide, sodium hydroxide, potassium hydroxide, rubidium hydroxide, cesium hydroxide and mixtures of two or more compounds thereof. However, the alkali metal hydroxide is not limited thereto. Among these, sodium hydroxide is preferred in that it is industrially available on the cheap. The alkali metal hydroxide is preferably used as an aqueous mixture (i.e., a mixture with water having fluidity) such as an aqueous solution from the viewpoint of handling property such as metering.

3. Dihalo-aromatic compound:

The dihalo-aromatic compound used in the present invention is a dihalogenated aromatic compound having 2 halogen atoms directly bonded to the aromatic ring. Specific examples of the dihalo-aromatic compound include o-dihalobenzenes, m-dihalobenzenes, p-dihalobenzenes, dihalotoluenes, dihalonaphthalenes, methoxy-dihalobenzenes, dihalobiphenyls, dihalobenzoic acids, dihalodiphenyl ethers, dihalodiphenyl sulfones, dihalodiphenyl sulfoxides and dihalodiphenyl ketones. These dihalo-aromatic compounds may be used either singly or in any combination thereof.

Here, the halogen atom means each atom of fluorine, chlorine, bromine and iodine, and 2 halogen atoms in the same dihalo-aromatic compound may be the same or different from each other. In many cases, o-dichlorobenzene, m-dichlorobenzene, p-dichlorobenzene or a mixture of 2 or more compounds thereof is used as the dihalo-aromatic compound.

4. Polyhalo-aromatic compound:

In the present invention, a polyhalo-aromatic compound having 3 or more halogen substituents is used for introducing a branched structure into the PAS resin. A halogen substituent is generally a halogen atom directly bonded to the aromatic ring. The halogen atom means each atom of fluorine, chlorine, bromine and iodine, and plural halogen atoms in the same dihalo-aromatic compound may be the same or different from each other.

Specific examples of the polyhalo-aromatic compound include 1,2,3-trichlorobenzene, 1,2,4-trichlorobenzene, 1,3,5-trichlorobenzene, hexachlorobenzene, 1,2,3,4-tetrachlorobenzene, 1,2,4,5-tetrachlorobenzene, 1,3,5-trichloro-2,4,6-trimethylbenzene, 2,4,6-trichlorotoluene, 1,2,3-trichloronaphthalene, 1,2,4-trichloronaphthalene, 1,2,3,4-tetrachloronaphthalene, 2,2',4,4'-tetrachlorobiphenyl, 2,2',4,4'-tetrachlorobenzophenone and 2,4,2'-trichlorobenzophenone.

These polyhalo-aromatic compounds may be used either singly or in any combination thereof. Among the polyhalo-aromatic compounds, trihalobenzenes such as 1,2,4-trichlorobenzene and 1,3,5-trichlorobenzene are preferred, and trichlorobenzenes are more preferred.

A small amount of, for example, an active hydrogencontaining halogenated aromatic compound or halogenated aromatic nitro compound may also be used in combination for introducing a branched or crosslinked structure.

5. Molecular weight modifier:

In order to form a terminal of a specific structure in a PAS formed or modify a polymerization reaction or a molecular weight, a monohalo-compound may be used in combination. As the monohalo-compound, not only a monohalo-aromatic compound, but also a monohalo-aliphatic compound may be used.

6. Organic amide solvent:

In the present invention, an organic amide solvent that is an aprotic polar organic solvent is used as a solvent for the dehydration reaction and polymerization reaction. The organic amide solvent is preferably stable to an alkali at a high temperature.

Specific examples of the organic amide solvent include amide compounds such as N,N-dimethylformamide and N,N-dimethylacetamide; N-alkylcaprolactam compounds such as N-methyl-ε-caprolactam; N-alkylpyrrolidone compounds or N-cycloalkylpyrrolidone compounds such as N-methyl-2-pyrrolidone and N-cyclohexyl-2-pyrrolidone; N,N-dialkylimidazolidinone compounds such as 1,3-dialkyl-2-imidazolidinones; tetraalkylurea compounds such as tetramethylurea; and hexaalkylphosphoric triamide compounds such as hexamethylphosphoric triamide. These organic amide solvents may be used either singly or in any combination thereof.

Among these organic amide solvents, N-alkylpyrrolidone compounds, N-cycloalkylpyrrolidone compounds, N-alkylcaprolactam compounds and N,N-dialkylimidazolidinone compounds are preferred, N-methyl-2-pyrrolidone (NMP), N-methyl-ε-caprolactam and 1,3-dialkyl-2-imidazolidinones are more preferred, and NMP is particularly preferred.

7. Polymerization aid:

In order to promote the polymerization reaction, various kinds of polymerization aids may be used in the present invention as needed. Specific examples of the polymerization aids include metal salts of organic sulfonic acids, lithium halides, metal salts of organic carboxylic acids and alkali metal salts of phosphoric acid, which are generally publicly known as polymerization aids for PAS resins.

8. Phase separation agent:

As the phase separation agent, may be used a substance, which is known in this technical field to function as a phase separation agent, such as an alkali metal carboxylate such as sodium acetate, lithium acetate, lithium propionate or lithium benzoate; or water. The alkali metal carboxylate is included in the above-described metal salts of organic carboxylic acids and may also be used as the polymerization aid. In the present invention, however, the carboxylate is used in an amount capable of functioning as the phase separation agent in the second-stage polymerization step. Among these phase separation agents, water is preferred in that its cost is cheap, and a post treatment is easy.

9. Production process of branched PAS resin:

The production process of a branched PAS resin according to the present invention is a production process of a branched PAS resin including polymerizing the sulfur source and the dihalo-aromatic compound in the presence of the polyhalo-aromatic compound having 3 or more halogen substituents in its molecule in the organic amide solvent.

More specifically, the sulfur source and the dihalo-aromatic compound are subjected to a polymerization reaction at a temperature of 170 to 270°C in the organic amide solvent, and the polyhalo-aromatic compound in an amount of 0.010 to 0.100 mol per mol of the sulfur source, and a phase separation agent are added into the resultant polymerization reaction mixture at the point of time the conversion of the dihalo-aromatic compound has reached at least 80% (first-stage polymerization step). The polymerization reaction mixture is then heated at a heating rate of 10 to 60°C/hour to raise the temperature of the mixture to at least 240°C (heating step). After the heating step, polymerization reaction mixture is heated to a temperature of 240 to 290°C to continue the polymerization reaction (second-stage polymerization step).

A dehydration step and a charging step are desirably arranged before the first-stage polymerization step is carried out to exactly control the contents of the respective components. A sulfur source including the alkali metal hydrosulfide is preferably used as the sulfur source. An alkali metal hydroxide is preferably caused to exist together with the sulfur source in the polymerization reaction system.

Accordingly, a preferable production process according to the present invention is a process for producing a branched poly(arylene sulfide) resin by polymerizing the sulfur source and the dihalo-aromatic compound in the presence of the polyhalo-aromatic compound having 3 or more halogen substituents in its molecule in the organic amide solvent, the process including the following Steps 1 to 5:

(1) Dehydration Step 1 of heating a mixture containing the organic amide solvent, the sulfur source including an alkali metal hydrosulfide, and an alkali metal hydroxide to discharge at least a part of a distillate containing water from the interior of the system containing the mixture to the exterior of the system;

(2) Charging Step 2 of mixing the mixture remaining in the system after the dehydration step with the dihalo-aromatic compound to prepare a charging mixture containing the organic amide solvent, the sulfur source (hereinafter referred to as "charged sulfur source"), the alkali metal hydroxide, water and the dihalo-aromatic compound;

(3) First-Stage Polymerization Step 3 of heating the charging mixture to a temperature of 170 to 270°C, thereby subjecting the sulfur source and the dihalo-aromatic compound to a polymerization reaction in the organic amide solvent containing water, and adding the polyhalo-aromatic compound in an amount of 0.010 to 0.100 mol per mol of the charged sulfur source, and the phase separation agent to the resultant polymerization reaction mixture at the point of time the conversion of the dihalo-aromatic compound has reached at least 80%;

(4) Heating Step 4 of heating the polymerization reaction mixture at a heating rate of 10 to 60°C/hour to raise the temperature of the mixture to at least 240°C; and

(5) Second-Stage Polymerization Step 5 of continuing the polymerization reaction at a temperature of 240 to 290°C.

In the production processes of PAS resins including the branched PAS resin, an alkali metal sulfide has heretofore been commonly used as the sulfur source. On the other hand, it is known to use, as a raw material of the sulfur source, an alkali metal hydrosulfide or a mixture of an alkali metal hydrosulfide and an alkali metal sulfide in place of the alkali metal sulfide and subject these sulfur sources to a polymerization reaction with a dihalo-aromatic compound in the presence of an alkali metal hydroxide.

According to the results of researches by the present inventors, it has been found that a process including using a sulfur source containing an alkali metal hydrosulfide and reacting the sulfur source with a dihalo-aromatic compound and a polyhalo-aromatic compound in the presence of an alkali metal hydroxide is suitable for use as a production process of a branched PAS resin excellent in balance among various properties. In order to stably carry out the polymerization reaction in this process, it is desirable to exactly control the contents of the respective components used in the polymerization reaction, and to strictly control the polymerization conditions. Accordingly, the preferable production process of the present invention will hereinafter be described in more detail.

9.1. Dehydration step:

The sulfur source often contains water such as water of hydration (water of crystallization). When the sulfur source and the alkali metal hydroxide are used as aqueous mixtures, water is contained as a medium. The polymerization reaction of the sulfur source with the dihalo-aromatic compound is affected by the content of water present in the polymerization reaction system. Thus, the dehydration step is generally arranged prior to the polymerization step to control the water content in the polymerization reaction system.

In the preferable production process of the present invention, a mixture containing the organic amide solvent, the sulfur source containing the alkali metal hydrosulfide, and the alkali metal hydroxide is heated in the dehydration step to discharge at least a part of a distillate containing water from the interior of the system containing the mixture to the exterior of the system. The dehydration step is desirably conducted under an inert gas atmosphere.

The dehydration step is conducted within a reaction vessel, and the discharge of the distillate to the exterior of the system is generally conducted by discharge out of the reaction vessel. Examples of water to be dehydrated in the dehydration step include water of hydration contained in the respective raw materials charged in the dehydration step, a water medium of the aqueous mixtures and water secondarily produced by a reaction between the respective raw materials.

The charging of the respective raw materials into the reaction vessel is conducted within a temperature range of generally from 20°C to 300°C, preferably from 20°C to 200°C. The charging of the respective raw materials may not be in order, and the respective raw materials may be additionally charged in the course of the dehydration process. An organic amide solvent is used as a medium in the dehydration step. The organic amide solvent used in the dehydration step is preferably the same as the organic amide solvent used in the polymerization step, with NMP being more preferred in that it is easy to be industrially available. The amount of the organic amide solvent used is generally about 0.1 to 10 kg per mol of the sulfur source charged into the reaction vessel.

The dehydration process is conducted by charging the respective components into the reaction vessel and then heating the mixture containing the respective components in a temperature range of generally up to 300°C, preferably 100 to 250°C for generally 15 minutes to 24 hours, preferably 30 minutes to 10 hours. Heating methods include a method of retaining a fixed temperature, a method of raising the temperature either stepwise or continuously and a method of combining both methods. The dehydration step is conducted by, for example, a batch system, a continuous system or a combined system thereof. An apparatus for conducting the dehydration step may be the same as a polymerization vessel (reactor) used in the polymerization step or different from it.

In the dehydration step, water and the organic amide solvent are distilled out in the form of vapor. Accordingly, the distillate contains water and the organic amide solvent. A part of the distillate may be refluxed into the system for the purpose of inhibiting the discharge of the organic amide solvent out of the system. However, at least a part of the distillate containing water is discharged out of the system for the purpose of controlling the water content. A minor amount of the organic amide solvent is discharged together with water out of the system when the distillate is discharged out of the system.

In the dehydration step, hydrogen sulfide resulting from the sulfur source is volatilized out. More specifically, when the mixture is heated in the dehydration step, the sulfur source reacts with water by the heating to form hydrogen sulfide and an alkali metal hydroxide, and gaseous hydrogen sulfide is volatized out. For example, 1 mol of an alkali metal hydrosulfide reacts with 1 mol of water to form 1 mol of hydrogen sulfide and 1 mol of an alkali metal hydroxide. The hydrogen sulfide volatilized out is also discharged out of the system attending on the discharging of at least a part of the distillate containing water.

The amount of the sulfur source in the mixture remaining in the system after the dehydration step is reduced from the amount of the sulfur source charged due to the hydrogen sulfide volatilized out of the system in the dehydration step. When a sulfur source including the alkali metal hydrosulfide as a main component is used, the amount of the sulfur source in the mixture remaining in the system after the dehydration step is substantially equal to a value obtained by subtracting a molar amount of hydrogen sulfide volatilized out of the system from a molar amount of the sulfur source charged. The sulfur source in the mixture remaining in the system after the dehydration step is referred to as "an available sulfur source" for distinguishing it from the sulfur source charged into the reaction vessel in the dehydration step. This available sulfur source is "a charged sulfur source" in the charging step and the subsequent polymerization steps. That is to say, "the charged sulfur source" in the present invention means an available sulfur source present in the mixture after the dehydration step.

The available sulfur source after the dehydration step is interpreted as a mixture containing the alkali metal hydrosulfide and the alkali metal sulfide. However, no particular limitation is imposed on the specific form thereof. Since it has heretofore been said that when an alkali metal hydrosulfide and an alkali metal hydroxide are heated in an organic amide solvent, they react with each other *in situ* to form an alkali metal sulfide, there is a possibility that when an alkali metal hydroxide is added in the dehydration step, an alkali metal sulfide may be formed by the reaction of the alkali metal hydrosulfide with the alkali metal hydroxide.

On the other hand, according to the results of recent researches on polymerization mechanisms of PAS resins, it is indicated that an alkali metal hydroxide reacts with an organic amide solvent by heating to form an alkali metal alkylaminoalkylcarboxylate, and this alkali metal alkylaminoalkylcarboxylate forms a complex with an alkali metal hydrosulfide.

Accordingly, no particular limitation is imposed on the form of the available sulfur source as a specific compound. However, it is apparent that the available sulfur source is subjected to a polymerization reaction with the dihalo-aromatic compound to form a PAS resin, and a molar ratio of the available sulfur source (charged sulfur source) to the other components greatly affects the polymerization reaction. Since the amount of the sulfur source charged first in the dehydration step is reduced due to the volatilization of hydrogen sulfide out of the system after the dehydration step, it is necessary to determine an amount of the sulfur source (available sulfur source) contained in the mixture remaining in the system after the dehydration step on the basis of the amount of the hydrogen sulfide volatilized out of the system. It is important to exactly determine the amount of the available sulfur source in that a molar ratio of the available sulfur source to the alkali metal hydroxide and a molar ratio of the available sulfur source to the dihalo-aromatic compound are controlled. Such a method for exactly determining the available sulfur source is a technique already established in this technical field.

In the dehydration step, the dehydration is conducted until the content of water including water of hydration, a water medium, secondarily produced water, etc. is lowered within a range of necessary amounts. In the dehydration step, the dehydration is desirably conducted until the water content is reduced to preferably 0.00 to 2.00 mol, more preferably 0.00 to 1.80 mol per mol of the available sulfur source. If the water content becomes too low in the dehydration step, water may be added in the charging step to regulate the water content to a desired value.

The alkali metal sulfide forms an alkali metal hydroxide by its equilibrium reaction with water. In the production process making use of the sulfur source comprising the alkali metal hydrosulfide as a main component, a molar ratio of the charged amount of the alkali metal hydroxide to a mol of the available sulfur source is calculated out in view of the amount of the alkali metal sulfide that is a minor component. When hydrogen sulfide is volatilized out of the system in the dehydration step, an alkali metal hydroxide in an amount almost equal to the number of moles of the hydrogen sulfide volatilized out is formed. Therefore, the molar ratio of the charged amount of the alkali metal hydroxide to a mol of the available sulfur source is calculated out in view of the amount of the hydrogen sulfide volatilized out as well.

In the dehydration step, it is preferable that a mixture containing the organic amide solvent, the sulfur source including the alkali metal hydrosulfide, and the alkali metal hydroxide in an amount of 0.900 to 1.050 mol per mol of the sulfur source be heated to discharge at least a part of a distillate containing water from the interior of the system containing the mixture to the exterior of the system.

If the molar ratio of the alkali metal hydroxide to a mol of the sulfur source is too low in the dehydration step, the amount of hydrogen sulfide volatilized off in the dehydration step becomes great, which tends to incur reduction in productivity due to lowering of the amount of the charged sulfur source or cause abnormal reactions and deterioration of a PAS formed due to increase of a persulfide component in the charged sulfur source remaining after the dehydration. If the molar ratio of the alkali metal hydroxide to a mol of the sulfur source is too high, change in properties of the organic amide solvent may be increased in some cases.

An apparatus for conducting the dehydration step may be the same as a reaction vessel used in the subsequent polymerization step or different from it. A material of the apparatus is preferably a corrosion-resistant material such as titanium. In the dehydration step, a part of the organic amide solvent is generally discharged together with water outside the reaction vessel. Hydrogen sulfide is discharged as a gas outside the system.

9.2. Charging step:

In the charging step, a charging mixture containing the organic amide solvent, the sulfur source (charged sulfur source), the alkali metal hydroxide, water and the dihalo-aromatic compound is prepared by mixing the mixture remaining in the system after the dehydration step with the dihalo-aromatic compound. Since the contents of the respective components are generally varied by the dehydration step, it is necessary to control the amounts of the respective components in the charging step in view of the amounts of the respective components in the mixture obtained in the dehydration step.

In the production process according to the present invention, a charging mixture containing the respective components is desirably prepared in the charging step in such a manner that the proportions of the respective components to a mol of the charged sulfur source are 0.950 to 1.090 mol for the alkali metal hydroxide, 0.00 to 2.00 mol for water and 0.950 to 1.200 mol for the dihalo-aromatic compound.

In the present invention, the amount of "the charged sulfur source" (available sulfur source) can be calculated out by subtracting "a molar amount of hydrogen sulfide volatilized off in the dehydration step" from "a molar amount of the sulfur source charged in the dehydration step".

The ratio (molar ratio) among the amounts of the respective components in the charging mixture is generally controlled by adding other components than the charged sulfur source into the mixture obtained in the dehydration step. The dihalo-aromatic compound is added into the mixture in the charging step. When the amounts of the alkali metal hydroxide and water in the mixture obtained in the dehydration step are small, these components are added in the charging step. When the amount of the organic amide solvent distilled out in the dehydration step is too great, the organic amide solvent is added in the charging step. Accordingly, in the charging step, the organic amide solvent, water and the alkali metal hydroxide may be added as needed in addition to the dihalo-aromatic compound.

When hydrogen sulfide is volatilized off in the dehydration step, an alkali metal hydroxide is produced by an equilibrium reaction and comes to remain in the mixture after the dehydration step. Accordingly, it is desirable to exactly grasp these amounts to determine a molar ratio of the alkali metal hydroxide to "the charged sulfur source" in the charging step. The number of moles of the alkali metal hydroxide is calculated out on the basis of "the number of moles of an alkali metal hydroxide formed with hydrogen sulfide formed upon the dehydration", "the number of moles of the alkali metal hydroxide added prior to the dehydration" and "the number of moles of the alkali metal hydroxide added in the charging step".

If the molar ratio of the alkali metal hydroxide to a mol of the charged sulfur source is too high, in some cases, change in properties of the organic amide solvent may be increased, or abnormal reactions may be caused upon polymerization. In addition, the lowering of the yield and quality of a branched PAS formed is often caused. The molar amount of the alkali metal hydroxide per mol of the charged sulfur source is preferably 0.950 to 1.090 mol, more preferably 0.980 to 1.070 mol, particularly preferably 1.000 to 1.060 mol. The molar ratio of the alkali metal hydroxide to a mol of the charged sulfur source is controlled within the above-described range in the first-stage polymerization step, whereby the polymerization reaction can be stably performed to easily provide a high-quality branched PAS resin.

A charging mixture containing a sulfur source containing more than 50 mol% of the alkali metal hydrosulfide and less than 50 mol% of the alkali metal sulfide is preferably prepared in the charging step. The sulfur source having such a composition is actually prepared in the dehydration step.

In the charging step, a molar amount of water per mol of the charged sulfur source is desirably controlled within a range of preferably 0.00 to 2.00 mol, more preferably 0.70 to 1.80 mol, particularly preferably 0.90 to 1.60 mol. If the amount of water coexisting in the first-stage polymerization step is too small, unpreferable reactions such as a decomposition reaction of a polymer formed are easy to occur. If the amount of the coexisting water is too great, a polymerization reaction speed becomes markedly slow, or decomposition reactions occur.

In the charging step, a charging mixture containing the dihalo-aromatic compound in a proportion of preferably 0.950 to 1.200 mol, more preferably 0.980 to 1.150 mol, particularly preferably 1.000 to 1.100 mol per mol of the charged sulfur source is desirably prepared. If the proportion of the dihalo-aromatic compound used does not fall within the above range, it is difficult to control the melt viscosity of the resulting resin within a desired range.

In the charging step, the amount of the organic amide solvent is desirably controlled within a range of generally 0.1 to 10 kg, preferably 0.15 to 1 kg per mol of the charged sulfur source. The amount of the organic amide solvent may be changed in the course of the polymerization steps so far as it falls within the above range.

9.3. First-stage polymerization step:

In the preferable production process of the present invention, the charging mixture is heated to a temperature of 170 to 270°C to subject the sulfur source and the dihalo-aromatic compound to a polymerization reaction in the organic amide solvent containing water. At the point of time the conversion of the dihalo-aromatic compound has reached at least 80%, the polyhalo-aromatic compound in a proportion of 0.010 to 0.100 mol per mol of the charged sulfur source and the phase separation agent are added into the polymerization reaction mixture.

The system of the polymerization reaction may be a batch system, a continuous system or a combination of both systems. In the batch-wise polymerization, 2 or more reaction vessels may be used for the purpose of shortening the polymerization cycle time. As a heating method, is used a method of retaining a fixed temperature, a method of raising the temperature either stepwise or continuously, or a combination of both methods. The polymerization temperature may also be lowered in the course of the polymerization reaction.

The polymerization reaction time is a total with the polymerization time in the second-stage polymerization step, and is within a range of generally from 10 minutes to 72 hours, preferably from 30 minutes to 48 hours. The polymerization time in the first-stage polymerization step is often from 30 minutes to 5 hours. The first-stage polymerization step may be composed of a plurality of steps of changing temperature conditions stepwise and adding water and the alkali metal hydroxide in portions. In the first-stage polymerization step, the polymerization reaction is generally conducted in the reaction system that the respective components including a polymer formed are uniformly dissolved.

In the first-stage polymerization step, the charging mixture is heated to a temperature of preferably 170 to 270°C, more preferably 180 to 240°C, particularly preferably 190 to 235°C to initiate a polymerization reaction, thereby forming a prepolymer that the conversion of the dihalo-aromatic compound is at least 80%. If the polymerization temperature in the first-stage polymerization step is too high, side reactions and decomposition reactions are easy to occur.

The conversion of the dihalo-aromatic compound is preferably 80 to 98%, more preferably 80 to 95%, particularly preferably 85 to 95%. The conversion of the dihalo-aromatic compound can be calculated out on the basis of an amount of the dihalo-aromatic compound remaining in the reaction mixture, which is determined by gas chromatography, the charged amount of the dihalo-aromatic compound and the charged amount of the sulfur source.

When the dihalo-aromatic compound is represented by "DHA", and the dihalo-aromatic compound is added in excess in terms of a molar ratio to the sulfur source, the conversion can be calculated out in accordance with the following equation 1:

$$\text{Conversion} = [(\text{Charged amount (mol) of DHA}) - (\text{Remaining amount (mol) of DHA})]/[(\text{Charged amount (mol) of DHA}) - (\text{Excessive amount (mol) of DHA})] \qquad (1).$$

In other case than the above-describe case, the conversion can be calculated out in accordance with the following equation 2:

$$\text{Conversion} = [(\text{Charged amount (mol) of DHA}) - (\text{Remaining amount of DHA})]/[\text{Charged amount (mol) of DHA}] \qquad (2).$$

In the production process according to the present invention, the sulfur source and the dihalo-aromatic compound are subjected to a polymerization reaction in the organic amide solvent, and the polyhalo-aromatic compound in a proportion of 0.010 to 0.100 mol per mol of the charged sulfur source and the phase separation agent are added into the polymerization reaction mixture at the point of time the conversion of the dihalo-aromatic compound has reached at least 80%. At the point of time the conversion of the dihalo-aromatic compound has reached at least 80%, the weight average molecular weight of a formed polymer (prepolymer) containing the polymerization reaction mixture generally comes to be 6,000 or higher.

The polyhalo-aromatic compound is used in a proportion of 0.010 to 0.100 mol, preferably 0.015 to 0.080 mol, more preferably 0.020 to 0.070 mol per mol of the charged sulfur source. If the amount of the polyhalo-aromatic compound used is too great, the melt viscoelasticity tan $\delta$ of the resulting branched PAS resin becomes too small, and the burr-inhibiting effect is lowered. If the amount of the polyhalo-aromatic compound used is too small, the introduction of the branched structure becomes insufficient to impair the burr-inhibiting effect.

If the polyhalo-aromatic compound is caused to exist in the reaction system from the beginning of the first-stage polymerization step to initiate a polymerization reaction, the melt viscosity of the resulting branched PAS resin is markedly increased, and the burr-inhibiting effect becomes insufficient. In addition, the surface properties of the resulting molded product are impaired. When the polyhalo-aromatic compound is caused to exist in the reaction system from the beginning of the first-stage polymerization step to initiate the polymerization reaction, and the polymerization time in the second-stage polymerization step is markedly shortened, a branched PAS resin having a low melt viscosity can be obtained. However, the melt viscoelasticity tan $\delta$ of this branched PAS resin becomes too great, and the burr-inhibiting effect becomes insufficient.

If the polyhalo-aromatic compound is added at the point of time the conversion of the dihalo-aromatic compound is lower than 80%, the resultant branched PAS resin shows a tendency to increase the melt viscosity, and on the other hand, the melt viscoelasticity tan $\delta$ thereof becomes too small, and the burr-inhibiting effect becomes insufficient.

The time when the polyhalo-aromatic compound is added is at the time the conversion of the dihalo-aromatic compound has reached preferably 80 to 98%, more preferably 85 to 95%. When the temperature of the first-stage polymerization is high, the polymerization temperature can be lowered in the course of the polymerization reaction, and the polyhalo-aromatic compound can be added at the point of time the conversion of the dihalo-aromatic compound has reached at least 80% to raise the temperature of the reaction system up to the temperature of the second-stage polymerization. The temperature of the polymerization reaction mixture at the time the first-stage polymerization step has been completed is desirably preset so as to become lower than the predetermined polymerization temperature specifically adopted in the second-stage polymerization step.

The phase separation agent is also added at the point of time the conversion of the dihalo-aromatic compound has reached at least 80%. The phase separation agent may be added at substantially the same time as the polyhalo-aromatic compound or after the polyhalo-aromatic compound is added. For example, the polyhalo-aromatic compound may be added into the polymerization reaction mixture at the point of time the conversion of the dihalo-aromatic compound has reached at least 80%, and the phase separation agent may be then added at the point of time the conversion of the dihalo-aromatic compound has reached at most 98%, preferably at most 95%.

As the phase separation agent, an alkali metal carboxylate or water may be used as described above, and water is preferably used because its cost is cheap, and a post treatment is easy. When water is used as the phase separation agent, water is preferably added into the polymerization reaction mixture at the point of time the conversion of the dihalo-aromatic compound has reached at least 80% in the first-stage polymerization step in such a manner that the content (total water content) of water in the polymerization reaction mixture is higher than 2.00 mol, but not higher than 10.00 mol per mol of the charged sulfur source. It is desired that water be added as the phase separation agent in such a manner that the water content in the polymerization reaction mixture is preferably 2.30 to 7.00 mol, more preferably 2.50 to 5.00 mol per mol of the charged sulfur source.

In the second-stage polymerization step, the polymerization reaction is generally continued in a state phase-separated into a concentrated polymer phase and a dilute polymer phase by adding the phase separation agent. If the amount of the phase separation agent added is too small, it is difficult to conduct the phase-separation polymerization and to obtain a branched PAS resin having the desired properties. If the amount of the phase separation agent added is too great, it takes a long time to conduct the polymerization reaction, and it is difficult to form a granular polymer.

9.4. Heating (temperature-raising) step:

After the polyhalo-aromatic compound and the phase separation agent are added in the first-stage polymerization step, the polymerization reaction mixture is heated at a heating rate of 10 to 60°C/hour to raise the temperature of the mixture to at least 240°C, preferably at least 245°C.

Since the polymerization reaction mixture is heated to a temperature of 240 to 290°C in the second-stage polymerization step to continue the polymerization reaction, the polymerization reaction mixture is heated after the first-stage polymerization step to raise the temperature of the mixture to a temperature suitable for the second-stage polymerization step. The upper limit of the temperature raised is the upper limit of the second-stage polymerization temperature.

If the heating rate is too slow, the production time is lengthened to lower production efficiency. If the heating rate is too fast on the other hand, the polymer formed aggregates in the concentrated polymer phase phase-separated to become enlarged. Therefore, the resulting branched PAS resin becomes coarse particles or mass. If the heating rate is too fast, the melt viscosity of a polymer formed may be rapidly increased in some cases. The heating rate is preferably 15 to 55°C/hour, more preferably 20 to 50°C/hour.

9.5. Second-stage polymerization step:

In the second-stage polymerization step, the polymerization reaction is generally continued in a state phase-separated into a concentrated polymer phase and a dilute polymer phase. Since the polymerization reaction is generally conducted under stirring, the phase-separation polymerization reaction is actually conducted in a state that the concentrated polymer phase has been dispersed as droplets in the organic amide solvent (dilute polymer phase). The phase-separated state is clearly observed with the progress of the second-stage polymerization reaction. The system of the polymerization reaction may be a batch system, a continuous system or a combination of both systems. In the batch-wise polymerization, 2 or more reaction vessels may be used for the purpose of shortening the polymerization cycle time.

In the second-stage polymerization step, the polymerization reaction is continued at a temperature of 240 to 290°C, preferably 245 to 270°C. The polymerization temperature may be kept at a fixed temperature, but may be raised or lower stepwise as needed.

The polymerization reaction time is within a range of generally from 10 minutes to 72 hours, preferably from 30 minutes to 48 hours in terms of the total time with the polymerization time in the first-stage polymerization step. The polymerization time in the second-stage polymerization step is often about 2 to 10 hours.

10. Post treatment step:

A post treatment after the polymerization reaction may be conducted in accordance with a method known *per se* in the art. For example, when the reaction mixture is cooled after completion of the polymerization reaction, a slurry containing a polymer formed is obtained. The slurry cooled is separated by filtration as it is or after diluted with water or the like, and the resulting filter cake is washed and filtered repeatedly, and finally dried, whereby a branched PAS resin can be collected.

According to the production process of the present invention, a granular polymer can be formed, so that the granular polymer is preferably separated from the slurry by a method of sieving the polymer by means of a screen because the polymer can be easily separated from by-products, oligomers, etc. The slurry may be subjected to sieving as it is in a high-temperature state, thereby collecting the polymer.

After the sieving, the polymer is preferably washed with the same organic amide solvent as the polymerization solvent, or an organic solvent such as a ketone (for example, acetone) or an alcohol (for example, methanol). The polymer may be washed with hot water or the like. The polymer may also be treated with an acid or a salt such as ammonium chloride. When the average particle diameter of the granular polymer is too great, a grinding step may be arranged so as to achieve the desired average particle diameter. Grinding and/or classification of the granular polymer may also be conducted.

11. Branched PAS resin:

According to the production process of the present invention, a branched PAS resin having the following properties i to iii:

> i) a melt viscosity of $10.0 \times 10^4$ to $40.0 \times 10^4$ Pa·s as measured at a temperature of 330°C and a shear rate of 2 sec$^{-1}$;
> ii) an average particle diameter of 50 to 2,000 $\mu$m; and iii) a melt viscoelasticity tan $\delta$ of 0.10 to 0.30 as measured at a temperature of 310°C and an angular velocity of 1 rad/sec
> can be obtained by arranging a step of grinding the polymer formed as needed after the polymerization reaction.

The melt viscosity (as measures at a temperature of 330°C and a shear rate of 2 sec$^{-1}$) of the branched PAS resin according to the present invention is preferably $11.0 \times 10^4$ to $40.0 \times 10^4$ Pa·s, more preferably $12.0 \times 10^4$ to $38.0 \times 10^4$ Pa·s, particularly preferably $13.0 \times 10^4$ to $35.0 \times 10^4$ Pa·s. When the branched PAS resin according to the present invention is used as a polymeric modifier by blending it with a straight-chain PAS resin, the melt viscosity (as measures at a temperature of 330°C and a shear rate of 2 sec$^{-1}$) of the branched PAS resin is desirably controlled within a range of preferably $11.0 \times 10^4$ to $27.0 \times 10^4$ Pa·s, particularly preferably $12.0 \times 10^4$ to $26.0 \times 10^4$ Pa·s in that the burr-inhibiting effect and the surface properties of the resulting molded product are balanced with each other at a high level.

The average particle diameter of the branched PAS resin according to the present invention is preferably 60 to 1,500 $\mu$m, more preferably 70 to 1,000 $\mu$m. When the branched PAS resin according to the present invention is used as a polymeric modifier by blending it with a straight-chain PAS resin, the average particle diameter of the branched PAS resin is particularly preferably controlled within a range of not greater than 500 $\mu$m, often from 70 to 500 $\mu$m in that the burr-inhibiting effect and the surface properties of the resulting molded product are balanced with each other at a high level. In order to control the average particle diameter of the branched PAS resin, the branched PAS resin obtained by the polymerization may be ground and/or classified. The melt viscoelasticity tan $\delta$ (as measured at a temperature of 310°C and an angular velocity of 1 rad/sec) of the branched PAS resin according to the present invention is preferably 0.11 to 0.29.

If the melt viscosity of the branched PAS resin is too high, the burr-inhibiting effect becomes insufficient, and the surface properties of the resulting molded product are deteriorated. If the melt viscosity of the branched PAS resin is too low, the burr-inhibiting effect becomes poor. If the average particle diameter of the branched PAS resin is too small, handling, metering and the like become difficult. If the average particle diameter of the branched PAS resin is too great, the surface properties of the molded product are impaired, and it is difficult to blend such a resin with other resins such as a straight-chain PAS resin.

The melt viscoelasticity tan $\delta$ of the branched PAS resin falls within the above range, whereby an excellent burr-inhibiting effect is achieved. If the melt viscoelasticity tan $\delta$ of the branched PAS resin is too great or small, the burr-inhibiting effect becomes poor.

With respect to the branched PAS resin according to the present invention, the melt viscoelasticity tan $\delta$ as measured at a temperature of 310°C and an angular velocity of 100 rad/sec is generally 0.25 to 0.70, often 0.30 to 0.60.

The branched PAS resin according to the present invention is preferably used by blending it with a substantially linear straight-chain PAS resin. The substantially linear straight-chain PAS resin is a PAS resin obtained as a high-molecular weight polymer upon polymerization. On the other hand, there is a crosslinked PAS resin of the type that after a polymer having a low polymerization degree is obtained upon polymerization, the polymer is heated (cured) in the presence of air to conduct partial crosslinking. The straight-chain PAS resin used in the present invention is a polymer well-known in the art.

The straight-chain PAS resin is desirably a straight-chain PAS resin having a melt viscosity of generally 5 to 1,500 Pa·s, preferably 10 to 1,000 Pa·s, more preferably 15 to 500 Pa·s as measured at a temperature of 310°C and a shear rate of 1,216 sec$^{-1}$.

In the present invention, a resin composition obtained by blending 1 to 50 parts by weight of the branched PAS resin with 100 parts by weight of the straight-chain PAS resin is preferred. The proportion of the branched PAS resin blended is preferably 5 to 40 parts by weight.

Various kinds of organic or inorganic fillers may be added into this resin composition. As the fillers, may be used any of fillers used in this technical field, such as powdery or particulate fillers and fibrous fillers. Among these fillers, fibrous inorganic fillers such as glass fibers and carbon fibers are preferred.

The proportion of the filler blended is generally 400 parts by weight or lower, preferably 350 parts by weight or lower, more preferably 300 parts by weight or lower per 100 parts by weight of the straight-chain PAS resin. When the filler is blended, the lower limit value thereof is generally 0.01 part by weight, often 0.1 part by weight per 100 parts by weight of the straight-chain PAS resin. The proportion of the filler blended may be suitably preset within the above range as necessary for the end application intended.

EXAMPLES

The present invention will hereinafter be described more specifically by the following Examples and Comparative Examples. Measuring methods of physical properties and properties are as follows.

(1) Yield:

Assuming that all the available sulfur source (available S) existing in a reaction vessel after a dehydration step was converted to a polymer, the weight (theoretical amount) of that polymer was used as a reference value to calculate out a proportion (% by weight) of the weight of a polymer actually collected to the reference value as a yield of the polymer.

(2) Melt viscosity:

A melt viscosity was measured by using about 10 g of a dry polymer by means of Capirograph 1-C (manufactured by Toyo Seiki Seisakusho, Ltd.). At this time, an inlet angle-carrying die of 2.095 mm in diameter x 8 mm in length was used as a capillary, and the temperature was set to 330°C. After the polymer sample was placed in the apparatus and held for 5 minutes at 330°C, the melt viscosity was measured at a shear rate of 2 sec$^{-1}$.

(3) Average particle diameter:

Nine sieves having respectively sieve openings of 200 mesh, 150 mesh, 100 mesh, 60 mesh, 32 mesh, 24 mesh, 16 mesh, 12 mesh and 7 mesh from the bottom were laid on top of another in accordance with JIS K 0069, and a polymer sample was put on the uppermost sieve to conduct measurement under conditions of a shaking time of 15 minutes, an amplitude of 6 and an interval of 6 by means of an electromagnetic sieve shaker (trade name "ANALYSETTE 3") manufactured by FRITSCH CO.

(4) Melt viscoelasticity (tan δ):

About 3 g of a dry resin was placed in a circular frame having a diameter of 2 cm, hot-pressed at 320°C and quenched with ice water to prepare a test piece for rheometry. A melt viscoelasticity was measured by a parallel plate at a measuring temperature of 310°C and angular velocities ω of 1 rad/sec and 100 rad/sec by means of a rheometer RDSII manufactured by Rheometrix Co.) (5) Burr property:

Twenty parts by weight of a branched PAS resin and 80 parts by weight of glass fibers (diameter: 13 μm, length: 3 mm, product of Nippon Electric Glass Co., Ltd.) were mixed for 2 minutes with 100 parts by weight of a straight-chain PPS resin having a melt viscosity of 55 Pa·s as measured at a temperature of 310°C and a shear rate of 1,216 sec$^{-1}$, and this mixture was charged into a twin-screw extruder of a cylinder temperature of 320°C to prepare pellets of a resin composition. The pellets were injection-molded in a mold for evaluation as to burr having a cavity of 70 mm in diameter x 3 mm in thickness under a minimum charging pressure at which the resin composition was completely charged. The conditions for the injection molding are as follows.

<Conditions for injection molding>

Injection molding machine: IS-75E, manufactured by Toshiba Machine Co., Ltd.,
Cylinder temperature: NH/H1/H2/H3/H4 = 310/320/310/300/290 (°C),
Mold temperature: 140°C (120°C).

<Measurement of burr length>

A length (burr length) of burr occurred in a slit of 20 μm in thickness x 5 mm provided at a circumferential portion of the mold was measured by means of an enlarging profile projector. A shorter burr length indicates that the inhibitory effect (burr property) on the occurrence of burr is better. The burr property was evaluated in accordance with the following standard.

A: Burr length not longer than 80 μm;
B: Burr length longer than 80 μm, but shorter than 100 μm;
C: Burr length not shorter than 100 μm.

(6) Surface properties of molded product

Both surfaces of a molded product (disk having a diameter of 70 mm and a thickness of 3 mm) for evaluation as to burr were visually observed to make evaluation in accordance with the following standard.

A: Four or less small crater-like depressions were observed;
B: Five to twenty crater-like depressions were observed;
C: At least 21 crater-like depressions were observed.

Example 1

(1) Dehydration step:

A 20-liter autoclave (reactor) made of titanium was charged with 1,801 g of an aqueous sodium hydrosulfide (NaSH) solution having an analytical value of 62.87% by weight as measured by iodimetry and 1,080 g of a 74.40% by weight aqueous sodium hydroxide (NaOH) solution (NaOH content: 20.09 mol) together with 6,000 g of N-methyl-2-pyrrolidone (hereinafter abbreviated as "NMP").

The sulfur (S) content in 1,801 g of the aqueous sodium hydrosulfide (NaSH) solution is 20.20 mol. The analytical value of NaSH by a neutralization titration method in this aqueous solution is 61.77% by weight (19.84 mol), and 0.35 mol of sodium sulfide ($Na_2S$) is contained therein. When a sulfur source composed of sodium hydrosulfide and sodium sulfide is indicated as "S", NaOH/NaSH before dehydration is 1.012 (mol/mol), and NaOH/S is 0.994 (mol/mol).

After the interior of the reactor was purged with nitrogen gas, the contents were gradually heated to 200°C over 2 hours and 20 minutes with stirring to distill off 861 g of water and 718 g of NMP. At this time, 0.38 mol of hydrogen sulfide ($H_2S$) was volatilized off. Accordingly, the amount of the available S in the reactor after the dehydration step was 19.82 mol. The amount of $H_2S$ volatilized off corresponded to 1.88 mol% based on the charged amount of S.

(2) Charging step:

After the dehydration step, the reactor containing 19.82 mol of the available S was cooled down to 170°C, 3,089 g of p-dichlorobenzene (hereinafter abbreviated as "pDCB") [pDCB /available S = 1.060 (mol/mol)], 3,637 g of NMP and 115 g of water [total water content in the reactor/available S = 1.50 (mol/mol)] were added, and 3 g of NaOH having a purity of 97% was added in such a manner that (NaOH in the reactor/available S) is 1.054 (mol/mol). NaOH (0.76 mol) produced by volatilization of $H_2S$ is contained in the reactor.

(3) Polymerization step:

While stirring the charging mixture at 250 rpm by a stirrer installed in the reactor, a reaction was conducted at 220°C for 3.0 hours, and the reaction mixture was then cooled to 210°C in 35 minutes (first-stage polymerization step). The conversion of pDCB upon completion of the first-stage polymerization was 90%. The number of revolutions of the stirrer was then increased to 400 rpm, 120.8 g of 1,2,4-trichlorobenzene (hereinafter abbreviated as "TCB") [TCB/ available S = 0.033 (mol/mol)] and 589 g of water were charged under pressure into the reactor [total water content in the reactor/available S = 3.15 (mol/mol)] while continuing the stirring, and the contents were heated to 255°C at a heating rate of 33°C/hour to conduct a reaction for 5.0 hours (second-stage polymerization step).

(4) Post treatment step:

After completion of the reaction, the reaction mixture was cooled near to room temperature and then sifted through a 100-mesh screen to collect a granular polymer. The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 83%. The physical property and property data of the polymer are shown in Table 1.

Example 2

(1) Dehydration step:

A 20-liter autoclave (reactor) made of titanium was charged with 1,841 g of an aqueous sodium hydrosulfide (NaSH) solution having an analytical value of 62.39% by weight as measured by iodimetry and 1,094 g of a 74.16% by weight aqueous sodium hydroxide (NaOH) solution (NaOH content: 20.28 mol) together with 6,010 g of NMP.
The sulfur (S) content in 1,841 g of the aqueous sodium hydrosulfide (NaSH) solution is 20.49 mol. The analytical value of NaSH by a neutralization titration method in this aqueous solution is 61.09% by weight (20.06 mol), and 0.43 mol of sodium sulfide ($Na_2S$) is contained therein. When a sulfur source composed of sodium hydrosulfide and sodium sulfide is indicated as "S", NaOH/NaSH before dehydration is 1.011 (mol/mol), and NaOH/S is 0.990 (mol/mol).
After the interior of the reactor was purged with nitrogen gas, the contents were gradually heated to 200°C over 2 hours with stirring to distill off 917 g of water and 862 g of NMP. At this time, 0.35 mol of hydrogen sulfide ($H_2S$) was volatilized off. Accordingly, the amount of the available S in the reactor after the dehydration step was 20.13 mol. The amount of $H_2S$ volatilized off corresponded to 1.73 mol% based on the charged amount of S.

(2) Charging step:

After the dehydration step, the reactor containing 20.13 mol of the available S was cooled down to 170°C, 3,171 g of p-dichlorobenzene (pDCB) [pDCB/available S = 1.072 (mol/mol)], 3,911 g of NMP and 147 g of water [total water content in the reactor/available S = 1.50 (mol/mol)] were added, and 6 g of NaOH having a purity of 97% was added in such a manner that (NaOH in the reactor/available S) is 1.054 (mol/mol). NaOH (0.71 mol) produced by volatilization of $H_2S$ is contained in the reactor.

(3) Polymerization step:

While stirring the charging mixture at 250 rpm by a stirrer installed in the reactor, a reaction was conducted at 220°C for 3.0 hours, and the reaction mixture was then cooled to 210°C in 35 minutes (first-stage polymerization step). The conversion of pDCB upon completion of the first-stage polymerization was 91%. The number of revolutions of the stirrer was then increased to 400 rpm, 123.3 g of trichlorobenzene (TCB) [TCB/available S = 0.034 (mol/mol)] and 599 g of water were charged under pressure into the reactor [total water content in the reactor/available S = 3.15 (mol/mol)] while continuing the stirring, and the contents were heated to 255°C at a heating rate of 30°C/hour to conduct a reaction for 2.0 hours (second-stage polymerization step).

(4) Post treatment step:

After completion of the reaction, the reaction mixture was cooled near to room temperature and then sifted through a 100-mesh screen to collect a granular polymer. The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 83%. The physical property and property data of the polymer are shown in Table 1.

Example 3

(1) Dehydration step:

A 20-liter autoclave (reactor) made of titanium was charged with 1,839 g of an aqueous sodium hydrosulfide (NaSH) solution having an analytical value of 62.39% by weight as measured by iodimetry and 1,091 g (NaOH content: 20.23 mol) of a 74.16% by weight aqueous sodium hydroxide (NaOH) solution together with 6,017 g of NMP.
The sulfur (S) content in 1,839 g of the aqueous sodium hydrosulfide (NaSH) solution is 20.47 mol. The analytical value of NaSH by a neutralization titration method in this aqueous solution is 61.09% by weight (20.04 mol), and 0.43 mol of sodium sulfide ($Na_2S$) is contained therein. When a sulfur source composed of sodium hydrosulfide and sodium sulfide is indicated as "S", NaOH/NaSH before dehydration is 1.009 (mol/mol), and NaOH/S is 0.988 (mol/mol).
After the interior of the reactor was purged with nitrogen gas, the contents were gradually heated to 200°C over 2 hours with stirring to distill off 892 g of water and 907 g of NMP. At this time, 0.35 mol of hydrogen sulfide ($H_2S$) was volatilized off. Accordingly, the amount of the available S in the reactor after the dehydration step was 20.12 mol. The amount of $H_2S$ volatilized off corresponded to 1.69 mol% based on the charged amount of S.

(2) Charging step:

After the dehydration step, the reactor containing 20.12 mol of the available S was cooled down to 170°C, 3,164 g of p-dichlorobenzene (pDCB) [pDCB/available S = 1.070 (mol/mol)], 3,945 g of NMP and 123 g of water [total water content in the reactor/available S = 1.50 (mol/mol)] were added, and 9 g of NaOH having a purity of 97% was added in such a manner that (NaOH in the reactor/available S) is 1.054 (mol/mol). NaOH (0.69 mol) produced by volatilization of $H_2S$ is contained in the reactor.

(3) Polymerization step:

While stirring the charging mixture at 250 rpm by a stirrer installed in the reactor, a reaction was conducted at 220°C for 3.0 hours, and the reaction mixture was then cooled to 210°C in 35 minutes (first-stage polymerization step). The conversion of pDCB upon completion of the first-stage polymerization was 91%. The number of revolutions of the stirrer was then increased to 400 rpm, 123.8 g of trichlorobenzene (TCB) [TCB/available S = 0.034 (mol/mol)] and 598 g of water were charged under pressure into the reactor [total water content in the reactor/available S = 3.15 (mol/mol)] while continuing the stirring, and the contents were heated to 255°C at a heating rate of 36°C/hour to conduct a reaction for 2.0 hours (second-stage polymerization step).

(4) Post treatment step:

After completion of the reaction, the reaction mixture was cooled near to room temperature and then sifted through a 100-mesh screen to collect a granular polymer. The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 84%. The physical property and property data of the polymer are shown in Table 1.

Example 4

(1) Dehydration step:

A 20-liter autoclave (reactor) made of titanium was charged with 1,848 g of an aqueous sodium hydrosulfide (NaSH) solution having an analytical value of 62.39% by weight as measured by iodimetry and 1,094 g of a 74.16% by weight aqueous sodium hydroxide (NaOH) solution (NaOH content: 20.28 mol) together with 6,006 g of NMP.

The sulfur (S) content in 1,848 g of the aqueous sodium hydrosulfide (NaSH) solution is 20.57 mol. The analytical value of NaSH by a neutralization titration method in this aqueous solution is 61.09% by weight (20.14 mol), and 0.43 mol of sodium sulfide ($Na_2S$) is contained therein. When a sulfur source composed of sodium hydrosulfide and sodium sulfide is indicated as "S", NaOH/NaSH before dehydration is 1.007 (mol/mol), and NaOH/S is 0.986 (mol/mol).

After the interior of the reactor was purged with nitrogen gas, the contents were gradually heated to 200°C over 2 hours with stirring to distill off 904 g of water and 890 g of NMP. At this time, 0.35 mol of hydrogen sulfide ($H_2S$) was volatilized off. Accordingly, the amount of the available S in the reactor after the dehydration step was 20.22 mol. The amount of $H_2S$ volatilized off corresponded to 1.70 mol% based on the charged amount of S.

(2) Charging step:

After the dehydration step, the reactor containing 20.22 mol of the available S was cooled down to 170°C, 3,095 g of p-dichlorobenzene (pDCB) [pDCB/available S = 1.042 (mol/mol)], 3,980 g of NMP and 132 g of water [total water content in the reactor/available S = 1.50 (mol/mol)] were added, and 10 g of NaOH having a purity of 97% was added in such a manner that (NaOH in the reactor/available S) is 1.054 (mol/mol). NaOH (0.70 mol) produced by volatilization of $H_2S$ is contained in the reactor.

(3) Polymerization step:

While stirring the charging mixture at 250 rpm by a stirrer installed in the reactor, a reaction was conducted at 220°C for 3.0 hours, and the reaction mixture was then cooled to 210°C in 35 minutes (first-stage polymerization step). The conversion of pDCB upon completion of the first-stage polymerization was 90%. The number of revolutions of the stirrer was then increased to 400 rpm, 208.3 g of trichlorobenzene (TCB) [TCB/available S = 0.056 (mol/mol)] and 601 g of water were charged under pressure into the reactor [total water content in the reactor/available S = 3.15 (mol/mol)] while continuing the stirring, and the contents were heated to 255°C at a heating rate of 48°C/hour to conduct a reaction for 2.0 hours (second-stage polymerization step).

(4) Post treatment step:

After completion of the reaction, the reaction mixture was cooled near to room temperature and then sifted through a 100-mesh screen to collect a granular polymer. The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 81%. The physical property and property data of the polymer are shown in Table 1.

Example 5

(1) Dehydration step:

A 20-liter autoclave (reactor) made of titanium was charged with 1,845 g of an aqueous sodium hydrosulfide (NaSH) solution having an analytical value of 62.39% by weight as measured by iodimetry and 1,094 g of a 74.16% by weight aqueous sodium hydroxide (NaOH) solution (NaOH content: 20.28 mol) together with 6,002 g of NMP.

The sulfur (S) content in 1,845 g of the aqueous sodium hydrosulfide (NaSH) solution is 20.53 mol. The analytical value of NaSH by a neutralization titration method in this aqueous solution is 61.09% by weight (20.11 mol), and 0.43 mol of sodium sulfide ($Na_2S$) is contained therein. When a sulfur source composed of sodium hydrosulfide and sodium sulfide is indicated as "S", NaOH/NaSH before dehydration is 1.009 (mol/mol), and NaOH/S is 0.988 (mol/mol).

After the interior of the reactor was purged with nitrogen gas, the contents were gradually heated to 200°C over 2 hours with stirring to distill off 927 g of water and 864 g of NMP. At this time, 0.35 mol of hydrogen sulfide ($H_2S$) was volatilized off. Accordingly, the amount of the available S in the reactor after the dehydration step was 20.18 mol. The amount of $H_2S$ volatilized off corresponded to 1.72 mol% based on the charged amount of S.

(2) Charging step:

After the dehydration step, the reactor containing 20.18 mol of the available S was cooled down to 170°C, 3,164 g of p-dichlorobenzene (pDCB) [pDCB/available S = 1.067 (mol/mol)], 3,942 g of NMP and 156 g of water [total water content in the reactor/available S = 1.50 (mol/mol)] were added, and 9 g of NaOH having a purity of 97% was added in such a manner that (NaOH in the reactor/available S) is 1.054 (mol/mol). NaOH (0.71 mol) produced by volatilization of

$H_2S$ is contained in the reactor.

(3) Polymerization step:

While stirring the charging mixture at 250 rpm by a stirrer installed in the reactor, a reaction was conducted at 220°C for 3.0 hours, and the reaction mixture was then cooled to 210°C in 35 minutes (first-stage polymerization step). The conversion of pDCB upon completion of the first-stage polymerization was 91%. The number of revolutions of the stirrer was then increased to 400 rpm, 123.1 g of trichlorobenzene (TCB) [TCB/available S = 0.034 (mol/mol)] and 600 g of water were charged under pressure into the reactor [total water content in the reactor/available S = 3.15 (mol/mol)] while continuing the stirring, and the contents were heated to 255°C at a heating rate of 29°C/hour to conduct a reaction for 5.0 hours (second-stage polymerization step).

(4) Post treatment step:

After completion of the reaction, the reaction mixture was cooled near to room temperature and then sifted through a 100-mesh screen to collect a granular polymer. The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 83%. The physical property and property data of the polymer are shown in Table 1.

Example 6

(1) Dehydration step:

A 20-liter autoclave (reactor) made of titanium was charged with 1,840 g of an aqueous sodium hydrosulfide (NaSH) solution having an analytical value of 62.39% by weight as measured by iodimetry and 1,094 g of a 74.16% by weight aqueous sodium hydroxide (NaOH) solution (NaOH content: 20.28 mol) together with 6,005 g of NMP.
The sulfur (S) content in 1,840 g of the aqueous sodium hydrosulfide (NaSH) solution is 20.48 mol. The analytical value of NaSH by a neutralization titration method in this aqueous solution is 61.09% by weight (20.05 mol), and 0.43 mol of sodium sulfide ($Na_2S$) is contained therein. When a sulfur source composed of sodium hydrosulfide and sodium sulfide is indicated as "S", NaOH/NaSH before dehydration is 1.011 (mol/mol), and NaOH/S is 0.990 (mol/mol).
After the interior of the reactor was purged with nitrogen gas, the contents were gradually heated to 200°C over 2 hours with stirring to distill off 898 g of water and 903 g of NMP. At this time, 0.35 mol of hydrogen sulfide ($H_2S$) was volatilized off. Accordingly, the amount of the available S in the reactor after the dehydration step was 20.12 mol. The amount of $H_2S$ volatilized off corresponded to 1.73 mol% based on the charged amount of S.

(2) Charging step:

After the dehydration step, the reactor containing 20.12 mol of the available S was cooled down to 170°C, 3,114 g of p-dichlorobenzene (pDCB) [pDCB/available S = 1.053 (mol/mol)], 3,952 g of NMP and 128 g of water [total water content in the reactor/available S = 1.50 (mol/mol)] were added, and 6 g of NaOH having a purity of 97% was added in such a manner that (NaOH in the reactor/available S) is 1.054 (mol/mol). NaOH (0.71 mol) produced by volatilization of $H_2S$ is contained in the reactor.

(3) Polymerization step:

While stirring the charging mixture at 250 rpm by a stirrer installed in the reactor, a reaction was conducted at 220°C for 3.0 hours, and the reaction mixture was then cooled to 210°C in 35 minutes (first-stage polymerization step). The conversion of pDCB upon completion of the first-stage polymerization was 90%. The number of revolutions of the stirrer was then increased to 400 rpm, 165.0 g of trichlorobenzene (TCB) [TCB/available S = 0.045 (mol/mol)] and 598 g of water were charged under pressure into the reactor [total water content in the reactor/available S = 3.15 (mol/mol)] while continuing the stirring, and the contents were heated to 255°C at a heating rate of 36°C/hour to conduct a reaction for 2.0 hours (second-stage polymerization step).

(4) Post treatment step:

After completion of the reaction, the reaction mixture was cooled near to room temperature and then sifted through a 100-mesh screen to collect a granular polymer. The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 87%. The physical property and property data of the polymer are shown in Table 1.

Example 7

Synthesis was conducted in the same manner as in Example 1 except that (pDCB/available S) and the heating rate to the second-stage polymerization were changed to 1.055 (mol/mol) and 30°C/hour, respectively. The yield of the granular polymer thus obtained was 84%. The physical property and property data of the polymer are shown in Table 1.

Table 1

| | | Ex. 1 | Ex. 2 | Ex. 3 | Ex. 4 | Ex. 5 | Ex. 6 | Ex. 7 |
|---|---|---|---|---|---|---|---|---|
| First-stage polymerization | | | | | | | | |
|    PDCB/available S | mol/mol | 1.060 | 1.072 | 1.070 | 1.042 | 1.067 | 1.053 | 1.055 |
|    TCB/available S | mol/mol | 0 | 0 | 0 | 0 | 0 | 0 | 0 |
|    NaOH/available S | mol/mol | 1.054 | 1.054 | 1.054 | 1.054 | 1.054 | 1.054 | 1.054 |
|    $H_2O$/available S | mol/mol | 1.50 | 1.50 | 1.50 | 1.50 | 1.50 | 1.50 | 1.50 |
|       Temperature/time | °C/h | 220/3.0 | 220/3.0 | 220/3.0 | 220/3.0 | 220/3.0 | 220/3.0 | 220/3.0 |
|       Temperatur upon completion of first-stage polymerization | °C | 210 | 210 | 210 | 210 | 210 | 210 | 210 |
|    Addition of TCB and water | | | | | | | | |
|       Conversion upon addition of TCB | % | 90 | 91 | 91 | 90 | 91 | 90 | 90 |
|       TCB/available S | mol/mol | 0.033 | 0.034 | 0.034 | 0.056 | 0.034 | 0.045 | 0.033 |
|       $H_2O$/available S | mol/mol | 3.15 | 3.15 | 3.15 | 3.15 | 3.15 | 3.15 | 3.15 |
| Heating rate | °C/h | 33 | 30 | 36 | 48 | 29 | 36 | 30 |
| Second-stage polymerization Temperature/time | °C/h | 255/5.0 | 255/2.0 | 255/2.0 | 255/2.0 | 255/5.0 | 255/2.0 | 255/5.0 |
| Melt viscosity (330°C, 2 sec$^{-1}$) | Pa·s | 220,000 | 122,000 | 140,000 | 142,000 | 200,000 | 170,000 | 250,000 |
| Average particle diameter | μm | 520 | 1,250 | 1,280 | 1,370 | 710 | 400 | 350 |
| Melt viscoelasticity (tan δ) | | | | | | | | |
|    ω = 1 rad/sec | | 0.19 | 0.27 | 0.25 | 0.11 | 0.23 | 0.13 | 0.14 |
|    ω = 100 rad/sec | | 0.37 | 0.55 | 0.51 | 0.38 | 0.43 | 0.37 | 0.32 |
| Evaluation as to molding | | | | | | | | |
|    Burr property | | A | A | A | A | A | A | A |
|    Surface properties | | A | A | A | A | A | A | A |

Comparative Example 1

(1) Dehydration step:

A 20-liter autoclave (reactor) made of titanium was charged with 1,840 g of an aqueous sodium hydrosulfide (NaSH) solution having an analytical value of 62.39% by weight as measured by iodimetry and 1,092 g of a 74.16% by weight aqueous sodium hydroxide (NaOH) solution (NaOH content: 20.25 mol) together with 6,004 g of NMP.

The sulfur (S) content in 1,840 g of the aqueous sodium hydrosulfide (NaSH) solution is 20.48 mol. The analytical value of NaSH by a neutralization titration method in this aqueous solution is 61.09% by weight (20.05 mol), and 0.43 mol of sodium sulfide ($Na_2S$) is contained therein. When a sulfur source composed of sodium hydrosulfide and sodium sulfide is indicated as "S", NaOH/NaSH before dehydration is 1.010 (mol/mol), and NaOH/S is 0.989 (mol/mol).

After the interior of the reactor was purged with nitrogen gas, the contents were gradually heated to 200°C over 2 hours with stirring to distill off 913 g of water and 867 g of NMP. At this time, 0.35 mol of hydrogen sulfide ($H_2S$) was volatilized off. Accordingly, the amount of the available S in the reactor after the dehydration step was 20.14 mol. The amount of $H_2S$ volatilized off corresponded to 1.70 mol% based on the charged amount of S.

(2) Charging step:

After the dehydration step, the reactor containing 20.14 mol of the available S was cooled down to 170°C, 3,193 g of p-dichlorobenzene (pDCB) [pDCB/available S = 1.079 (mol/mol)], 3,919 g of NMP and 144 g of water [total water content in the reactor/available S = 1.50 (mol/mol)] were added, and 8 g of NaOH having a purity of 97% was added in such a manner that (NaOH in the reactor/available S) is 1.054 (mol/mol). NaOH (0.70 mol) produced by volatilization of $H_2S$ is contained in the reactor.

(3) Polymerization step:

While stirring the charging mixture at 250 rpm by a stirrer installed in the reactor, a reaction was conducted at 220°C for 3.0 hours, and the reaction mixture was then cooled to 210°C in 35 minutes (first-stage polymerization step). The conversion of pDCB upon completion of the first-stage polymerization was 91%. The number of revolutions of the stirrer was then increased to 400 rpm, 124.9 g of trichlorobenzene (TCB) [TCB/available S = 0.034 (mol/mol)] and 598 g of water were charged under pressure into the reactor [total water content in the reactor/available S = 3.15 (mol/mol)] while continuing the stirring, and the contents were heated to 255°C at a heating rate of 30°C/hour to conduct a reaction for 2.0 hours (second-stage polymerization step).

(4) Post treatment step:

After completion of the reaction, the reaction mixture was cooled near to room temperature and then sifted through a 100-mesh screen to collect a granular polymer.

The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 81%. The physical property and property data of the polymer are shown in Table 2.

Comparative Example 2

(1) Dehydration step:

A 20-liter autoclave (reactor) made of titanium was charged with 1,841 g of an aqueous sodium hydrosulfide (NaSH) solution having an analytical value of 62.39% by weight as measured by iodimetry and 1,094 g of a 74.16% by weight aqueous sodium hydroxide (NaOH) solution (NaOH content: 20.28 mol) together with 6,002 g of NMP.

The sulfur (S) content in 1,841 g of the aqueous sodium hydrosulfide (NaSH) solution is 20.49 mol. The analytical value of NaSH by a neutralization titration method in this aqueous solution is 61.09% by weight (20.06 mol), and 0.43 mol of sodium sulfide ($Na_2S$) is contained therein. When a sulfur source composed of sodium hydrosulfide and sodium sulfide is indicated as "S", NaOH/NaSH before dehydration is 1.011 (mol/mol), and NaOH/S is 0.990 (mol/mol).

After the interior of the reactor was purged with nitrogen gas, the contents were gradually heated to 200°C over 2 hours with stirring to distill off 922 g of water and 848 g of NMP. At this time, 0.35 mol of hydrogen sulfide ($H_2S$) was volatilized off. Accordingly, the amount of the available S in the reactor after the dehydration step was 20.15 mol. The amount of $H_2S$ volatilized off corresponded to 1.70 mol% based on the charged amount of S.

(2) Charging step:

After the dehydration step, the reactor containing 20.15 mol of the available S was cooled down to 170°C, 2,846 g of p-dichlorobenzene (pDCB) [pDCB/available S = 0.961 (mol/mol)], 3,908 g of NMP and 152 g of water [total water content in the reactor/available S = 1.50 (mol/mol)] were added, and 7 g of NaOH having a purity of 97% was added in such a manner that (NaOH in the reactor/available S) is 1.054 (mol/mol). NaOH (0.69 mol) produced by volatilization of $H_2S$ is contained in the reactor.

(3) Polymerization step:

While stirring the charging mixture at 250 rpm by a stirrer installed in the reactor, a reaction was conducted at 220°C for 3.0 hours, and the reaction mixture was then cooled to 210°C in 35 minutes (first-stage polymerization step). The conversion of pDCB upon completion of the first-stage polymerization was 90%. The number of revolutions of the stirrer was then increased to 400 rpm, 412.0 g of trichlorobenzene (TCB) [TCB/available S = 0.113 (mol/mol)] and 599 g of water were charged under pressure into the reactor [total water content in the reactor/available S = 3.15 (mol/mol)] while continuing the stirring, and the contents were heated to 255°C at a heating rate of 58°C/hour to conduct a reaction for 5.0 hours (second-stage polymerization step).

(4) Post treatment step:

After completion of the reaction, the reaction mixture was cooled near to room temperature and then sifted through a 100-mesh screen to collect a granular polymer. The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 84%. The physical property and property data of the polymer are shown in Table 2.

Comparative Example 3

(1) Dehydration step:

A 20-liter autoclave (reactor) made of titanium was charged with 1,696 g of an aqueous sodium hydrosulfide (NaSH) solution having an analytical value of 62.12% by weight as measured by iodimetry and 972 g of a 73.95% by weight aqueous sodium hydroxide (NaOH) solution (NaOH content: 17.97 mol) together with 6,004 g of NMP.
The sulfur (S) content in 1,696 g of the aqueous sodium hydrosulfide (NaSH) solution is 18.79 mol. The analytical value of NaSH by a neutralization titration method in this aqueous solution is 59.50% by weight (18.00 mol), and 0.79 mol of sodium sulfide ($Na_2S$) is contained therein. When a sulfur source composed of sodium hydrosulfide and sodium sulfide is indicated as "S", NaOH/NaSH before dehydration is 0.998 (mol/mol), and NaOH/S is 0.956 (mol/mol).
After the interior of the reactor was purged with nitrogen gas, the contents were gradually heated to 200°C over 2 hours and 30 minutes with stirring to distill off 850 g of water and 940 g of NMP. At this time, 0.45 mol of hydrogen sulfide ($H_2S$) was volatilized off. Accordingly, the amount of the available S in the reactor after the dehydration step was 18.34 mol. The amount of $H_2S$ volatilized off corresponded to 2.40 mol% based on the charged amount of S.

(2) Charging step:

After the dehydration step, the reactor containing 18.34 mol of the available S was cooled down to 170°C, 2,715 g of p-dichlorobenzene (pDCB) [pDCB/available S = 1.007 (mol/mol)], 51.6 g of TCB [TCB/available S = 0.015 (mol/mol)], 3,604 g of NMP and 160 g of water [total water content in the reactor/available S = 1.50 (mol/mol)] were added, and 5 g of NaOH having a purity of 97% was added in such a manner that (NaOH in the reactor/available S) is 1.054 (mol/mol). NaOH (0.90 mol) produced by volatilization of $H_2S$ is contained in the reactor.

(3) Polymerization step:

While stirring the charging mixture at 250 rpm by a stirrer installed in the reactor, a reaction was conducted at 220°C for 4 hours and 35 minutes, and the reaction mixture was then cooled to 210°C in 35 minutes (first-stage polymerization step). The conversion of pDCB upon completion of the first-stage polymerization was 92%. The number of revolutions of the stirrer was then increased to 400 rpm, 826.1 g of water was charged under pressure into the reactor [total water content in the reactor/available S = 4.00 (mol/mol)] while continuing the stirring, and the contents were heated to 255°C at a heating rate of 33°C/hour to conduct a reaction for 5.0 hours (second-stage polymerization step).

(4) Post treatment step:

After completion of the reaction, the reaction mixture was cooled near to room temperature and then sifted through a 100-mesh screen to collect a granular polymer. The polymer separated was washed 2 times with acetone, 3 times with water, with 0.3% acetic acid and then additionally 4 times with water to obtain a washed polymer. The washed polymer was dried at 105°C for 13 hours. The yield of the granular polymer thus obtained was 69%. The physical property and property data of the polymer are shown in Table 2.

Comparative Example 4

Synthesis was conducted in the same manner as in Comparative Example 3 except that (pDCB/available S) and the second-stage polymerization time were changed to 1.036 (mol/mol) and 1.0 hour, respectively. The yield of the granular polymer thus obtained was 71%. The physical property and property data of the polymer are shown in Table 2.

Comparative Example 5

Synthesis was conducted in the same manner as in Example 1 except that trichlorobenzene (TCB) was added after 1.0 hour from the beginning of the first-stage polymerization. The conversion of pDCB upon the addition of TCB was 65%. The physical property and property data of the polymer thus obtained are shown in Table 2.

Comparative Example 6

Synthesis was conducted in the same manner as in Example 1 except that the heating rate from the first-stage polymerization to the second-stage polymerization was changed to 70°C/hour. As a result, the particles of the polymer formed became enlarged, and a part thereof became a great mass. The physical property and property data of the polymer thus obtained are shown in Table 2. However, this polymer was difficult to form a uniform resin composition (pellets) with a straight-chain PAS resin, and the moldability of the resultant resin composition was poor, so that evaluation as to molding was not made.

Table 2

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| First-stage polymerization | | | | | | | |
| PDCB/available S | mol/mol | 1.079 | 0.961 | 1.007 | 1.036 | 1.060 | 1.060 |
| TCB/available S | mol/mol | 0 | 0 | 0.015 | 0.015 | 0 | 0 |
| NaOH/available S | mol/mol | 1.054 | 1.054 | 1.054 | 1.054 | 1.054 | 1.054 |
| $H_2O$/available S | mol/mol | 1.50 | 1.50 | 1.50 | 1.50 | 1.50 | 1.50 |
| Temperature/time | °C/h | 220/3.0 | 220/3.0 | 220/4.6 | 220/4.6 | 220/3.0 | 220/3.0 |
| Temperature upon complexion of first-stage polymerization | °C | 210 | 210 | 210 | 210 | 210 | 210 |
| Addition of TCB and water | | | | | | | |
|     Conversion upon addition of TCB | % | 91 | 90 | 0 | 0 | 65 | 90 |
|     TCB/ available S | mol/mol | 0.034 | 0.113 | 0.015[*1] | 0.015[*1] | 0.033 | 0.033 |
|     $H_2O$/ available S | mol/mol | 3.15 | 3.15 | 4.00 | 4.00 | 3.15 | 3.15 |
| Heating rate | °C/h | 30 | 58 | 33 | 33 | 33 | 70 |
| Second-stage polymerization | | | | | | | |
|     Temperature/time | °C/h | 255/2.0 | 255/5.0 | 255/5.0 | 255/1.0 | 255/5.0 | 255/5.0 |

(continued)

| | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|
| Melt viscosity (330°C, 2 sec$^{-1}$) | Pa·s | 84,000 | 215,000 | 1,020,000 | 240,000 | 490,000 | 250,000 |
| Average particle diameter | μm | 1,180 | 240 | 190 | 810 | 110 | 2,570 |
| Melt viscoelasticity (tan δ) | | | | | | | |
| ω = 1 rad/sec | | 0.29 | 0.07 | 0.28 | 0.37 | 0.05 | 0.26 |
| ω = 100 rad/sec | | 0.63 | 0.21 | 0.42 | 0.56 | 0.12 | 0.47 |
| Evaluation as to molding | | | | | | | |
| Burr property | | C | C | B | C | C | - |
| Surface properties | | A | A | C | B | C | - |

(Note)
(*1) The values of "TCB/available S = 0.015 (mol/mol)" in Comparative Examples 3 and 4 indicate molar ratios in the respective charging mixtures prior to the beginning of the first-stage polymerization.

INDUSTRIAL APPLICABILITY

The branched PAS resins according to the present invention can markedly inhibit the occurrence of burr and provide molded products excellent in surface properties when blended as a polymeric modifier with thermoplastic resins such as straight-chain PAS resins. The branched PAS resins according to the present invention are also useful as not only an inhibitor of the occurrence of burr, but also a crystallinity improver upon injection molding.

Accordingly, the branched PAS resins according to the present invention can be used as polymeric improvers such as inhibitors of the occurrence of burr and crystallinity improvers upon injection molding by blending them with thermoplastic resin such as straight-chain PAS resins. Since the branched PAS resins according to the present invention are little in corrosiveness to metals compared with a heat-crosslinked PAS resin in which a crosslinked structure has been introduced by heating, resin compositions excellent in burr-inhibiting effect and little in mold-corroding tendency can be provided by blending them with a straight-chain PAS resin.

The branched PAS resins according to the present invention can be molded or formed into various kinds of molded products, films, sheets, fibers, etc. by general melt processing processes such as injection molding, extrusion and compression molding by blending them with other thermoplastic resins such as straight-chain PAS resins, and so they can be utilized as materials for resin parts in a wide variety of fields such as electrical and electronic equipments, automotive equipments and chemical equipments.

**Claims**

1. A process for producing a branched poly(arylene sulfide) resin by polymerizing a sulfur source and a dihalo-aromatic compound in the presence of a polyhalo-aromatic compound having 3 or more halogen substituents in its molecule in an organic amide solvent, the process comprising subjecting the sulfur source and the dihalo-aromatic compound to a polymerization reaction at a temperature of 170 to 270°C in the organic amide solvent, adding the polyhalo-aromatic compound in an amount of 0.010 to 0.100 mol per mol of the sulfur source, and a phase separation agent to the resultant polymerization reaction mixture at the point of time the conversion of the dihalo-aromatic compound has reached at least 80%, then heating the polymerization reaction mixture at a heating rate of 10 to 60°C/hour to raise the temperature of the mixture to at least 240°C, and continuing the polymerization reaction at a temperature of 240 to 290°C.

2. The production process according to claim 1, which comprises the following Steps 1 to 5:

(1) Dehydration Step 1 of heating a mixture containing the organic amide solvent, the sulfur source including an alkali metal hydrosulfide, and an alkali metal hydroxide to discharge at least a part of a distillate containing water from the interior of the system containing the mixture to the exterior of the system;
(2) Charging Step 2 of mixing the mixture remaining in the system after the dehydration step with the dihalo-aromatic compound to prepare a charging mixture containing the organic amide solvent, the sulfur source (hereinafter referred to as "charged sulfur source"), the alkali metal hydroxide, water and the dihalo-aromatic compound;

(3) First-Stage Polymerization Step 3 of heating the charging mixture to a temperature of 170 to 270°C, thereby subjecting the sulfur source and the dihalo-aromatic compound to a polymerization reaction in the organic amide solvent containing water, and adding the polyhalo-aromatic compound in an amount of 0.010 to 0.100 mol per mol of the charged sulfur source, and a phase separation agent to the resultant polymerization reaction mixture at the point of time the conversion of the dihalo-aromatic compound has reached at least 80%;

(4) Heating Step 4 of heating the polymerization reaction mixture at a heating rate of 10 to 60°C/hour to raise the temperature of the mixture to at least 240°C; and

(5) Second-Stage Polymerization Step 5 of continuing the polymerization reaction at a temperature of 240 to 290°C.

3. The production process according to claim 2, wherein in the Dehydration Step 1, a mixture containing the organic amide solvent, the sulfur source including an alkali metal hydrosulfide, and an alkali metal hydroxide is heated to a temperature of 100 to 250°C to discharge at least a part of a distillate containing water from the interior of the system containing the mixture to the exterior of the system.

4. The production process according to claim 2, wherein in the Dehydration Step 1, a mixture containing the organic amide solvent, the sulfur source including an alkali metal hydrosulfide, and an alkali metal hydroxide in a proportion of 0.900 to 1.050 mol per mol of the sulfur source is heated to discharge at least a part of a distillate containing water from the interior of the system containing the mixture to the exterior of the system.

5. The production process according to claim 2, wherein in the Dehydration Step 1, dehydration is conducted until the water content is reduced to 0.00 to 2.00 mol per mol of the sulfur source (charged sulfur source) remaining in the system.

6. The production process according to claim 2, wherein in the Charging Step 2, the charged sulfur source contains more than 50 mol% of the alkali metal hydrosulfide and less than 50 mol% of an alkali metal sulfide.

7. The production process according to claim 2, wherein in the Charging Step 2, the charging mixture containing the respective components is prepared in such a manner that the proportions of the alkali metal hydroxide, water and the dihalo-aromatic compound are 0.950 to 1.090 mol, 0.00 to 2.00 mol and 0.950 to 1.200 mol, respectively, per mol of the charged sulfur source.

8. The production process according to claim 2, wherein in the Charging Step 2, the charging mixture containing water and the dihalo-aromatic compound is prepared in such a manner that the proportions of water and the dihalo-aromatic compound are 0.90 to 1.60 mol and 1.000 to 1.100 mol, respectively, per mol of the charged sulfur source.

9. The production process according to claim 2, wherein in the Charging Step 2, the charging mixture is prepared in such a manner that the proportion of the organic amide solvent falls within a range of 0.1 to 10 kg per mol of the charged sulfur source.

10. The production process according to claim 2, wherein in the First-Stage Polymerization Step 3, the polyhalo-aromatic compound and the phase separation agent are added into the polymerization reaction mixture at the point of time the conversion of the dihalo-aromatic compound has reached 80 to 98%.

11. The production process according to claim 2, wherein in the First-Stage Polymerization Step 3, water is added as the phase separation agent into the polymerization reaction mixture at the point of time the conversion of the dihalo-aromatic compound has reached at least 80% in such a manner that the content of water in the polymerization reaction mixture is higher than 2.00 mol, but not higher than 10.00 mol per mol of the charged sulfur source.

12. The production process according to claim 2, wherein in the First-Stage Polymerization Step 3, the polyhalo-aromatic compound and the phase separation agent are added at the same time into the polymerization reaction mixture at the point of time the conversion of the dihalo-aromatic compound has reached at least 80%, or the polyhalo-aromatic compound is added at the point of time the conversion of the dihalo-aromatic compound has reached at least 80%, and the phase separation agent is then added while the conversion of the dihalo-aromatic compound reaches 95%.

13. The production process according to claim 2, wherein in the First-Stage Polymerization Step 3, the charging mixture is heated to a temperature of 190 to 235°C, thereby subjecting the sulfur source and the dihalo-aromatic compound to the polymerization reaction in the organic amide solvent containing water.

14. The production process according to claim 2, wherein in the Heating Step 4, the polymerization reaction mixture is heated at the heating rate of 10 to 60°C/hour to raise the temperature of the mixture to a temperature not lower than 240°C ranging from at least the polymerization temperature in the First-Stage Polymerization Step 3 to at most 290°C.

15. The production process according to claim 2, wherein in the Heating Step 4, the polymerization reaction mixture is heated at a heating rate of 15 to 55°C/hour.

16. The production process according to claim 2, wherein in the Second-Stage Polymerization Step 5, the polymerization reaction is continued at a temperature of 245 to 270°C.

17. The production process according to claim 1, wherein a step of grinding the polymer formed is arranged as needed after the polymerization reaction to obtain a branched poly(arylene sulfide) resin having the following properties i to iii:

i) a melt viscosity of $10.0 \times 10^4$ to $40.0 \times 10^4$ Pa·s as measured at a temperature of 330°C and a shear rate of 2 sec$^{-1}$;
ii) an average particle diameter of 50 to 2,000 $\mu$m; and
iii) a melt viscoelasticity tan $\delta$ of 0.10 to 0.30 as measured at a temperature of 310°C and an angular velocity of 1 rad/sec.

18. A branched poly(arylene sulfide) resin having the following properties i to iii:

i) a melt viscosity of $10.0 \times 10^4$ to $40.0 \times 10^4$ Pa·s as measured at a temperature of 330°C and a shear rate of 2 sec$^{-1}$;
ii) an average particle diameter of 50 to 2,000 $\mu$m; and
iii) a melt viscoelasticity tan $\delta$ of 0.10 to 0.30 as measured at a temperature of 310°C and an angular velocity of 1 rad/sec.

19. Use of the branched poly(arylene sulfide) resin according to claim 18 as a polymeric modifier.

20. The use according to 19, wherein the use of the branched poly(arylene sulfide) resin as the polymeric modifier is use as an inhibitor of the occurrence of burr for a substantially linear straight-chain poly(arylene sulfide) resin.

**Patentansprüche**

1. Verfahren zum Herstellen eines verzweigten Poly(arylensulfid)-Harzes durch Polymerisieren einer Schwefelquelle und einer dihalogenaromatischen Verbindung in Gegenwart einer polyhalogenaromatischen Verbindung, die 3 oder mehr Halogensubstituenten in ihrem Molekül hat, in einem organischen Amidlösemittel, wobei das Verfahren umfasst; Unterwerfen der Schwefelquelle und der dihalogenaromatischen Verbindung einer Polymerisationsreaktion bei einer Temperatur von 170 bis 270°C in einem organischen Amidlösemittel, Zugeben der polyhalogenaromatischen Verbindung in einer Menge von 0,010 bis 0,100 mol pro mol der Schwefelquelle und eines Phasentrennungsmittels zu der resultierenden Polymerisationsreaktionsmischung zu dem Zeitpunkt, an dem die Umwandlung der dihalogenaromatischen Verbindung wenigstens 80% erreicht hat, dann Erwärmen der Polymerisationsreaktionsmischung mit einer Erwärmungsrate von 10 bis 60°C/Stunde, um die Temperatur der Mischung auf wenigstens 240°C zu erhöhen, und Fortführen der Polymerisationsreaktion bei einer Temperatur von 240 bis 290°C.

2. Herstellungsverfahren gemäß Anspruch 1, das die folgenden Schritte 1 bis 5 umfasst:

(1) einen Dehydratationsschritt 1 des Erwärmens einer Mischung, die das organische Amidlösemittel, die Schwefelquelle, die ein Alkalimetallhydrosulfid umfasst, und ein Alkalimetallhydroxid enthält, um wenigstens einen Teil eines Destillats, das Wasser enthält, aus dem die Mischung enthaltenden Inneren des Systems zu der Außenseite des Systems auszutragen;
(2) einen Beschickungsschritt 2 des Mischens der Mischung, die in dem System nach dem Dehydratationsschritt zurückbleibt, mit der dihalogenaromatischen Verbindung, um eine Beschickungsmischung herzustellen, die das organische Amidlösemittel, die Schwefelquelle (im Folgenden als "eingetragene Schwefelquelle" bezeichnet), das Alkalimetallhydroxid, Wasser und die dihalogenaromatische Verbindung enthält;

(3) Schritt 3 der ersten Polymerisationsstufe des Erwärmens der Beschickungsmischung auf eine Temperatur von 170 bis 270°C, wodurch die Schwefelquelle und die dihalogenaromatische Verbindung einer Polymerisationsreaktion in dem organischen Amidlösemittel, das Wasser enthält, unterworfen werden, und Zusetzen der polyhalogenaromatischen Verbindung in einer Menge von 0,010 bis 0,100 mol pro mol der eingetragenen Schwefelquelle und eines Phasentrennungsmittels zu der resultierenden Polymerisationsreaktionsmischung zu dem Zeitpunkt, an dem die Umwandlung der dihalogenaromatischen Verbindung wenigstens 80% erreicht hat;

(4) Erwärmungsschritt 4 des Erwärmens der Polymerisationsreaktionsmischung mit einer Erwärmungsrate von 10 bis 60°C/Stunde, um die Temperatur der Mischung auf wenigstens 240°C zu erhöhen, und

(5) Schritt 5 der zweiten Polymerisationsstufe des Fortsetzens der Polymerisationsreaktion bei einer Temperatur von 240 bis 290°C.

3. Herstellungsverfahren gemäß Anspruch 2, wobei im Dehydratationsschritt 1 eine Mischung, die das organische Amidlösemittel, die Schwefelquelle, die ein Alkalimetallhydrosulfid enthält, und ein Alkalimetallhydroxid enthält, auf eine Temperatur von 100 bis 250°C erwärmt wird, um wenigstens einen Teil eines Destillats, das Wasser enthält, aus dem Inneren des Systems, das die Mischung enthält, zu dem Äußeren des Systems auszutragen.

4. Herstellungsverfahren gemäß Anspruch 2, wobei im Dehydratationsschritt 1 eine Mischung, die das organische Amidlösemittel, die Schwefelquelle, die ein Alklimetallhydrosulfid umfasst, und ein Alkalimetallhydroxid in einem Verhältnisanteil von 0,900 bis 1,050 mol pro mol der Schwefelquelle enthält, erwärmt wird, um wenigstens einen Teil eines Wasser enthaltenden Destillats aus dem Inneren des Systems, das die Mischung enthält, zu dem Äußeren des Systems auszutragen.

5. Herstellungsverfahren gemäß Anspruch 2, wobei im Dehydratationsschritt 1 eine Dehydratation durchgeführt wird, bis der Wassergehalt auf 0,00 bis 2,00 mol pro mol der Schwefelquelle (eingetragene Schwefelquelle), die in dem System verbleibt, verringert wird.

6. Herstellungsverfahren gemäß Anspruch 2, wobei im Beschickungsschritt 2 die eingetragene Schwefelquelle mehr als 50 mol% Alkalimetallhydrosulfid und weniger als 50 mol% Alkalimetallsulfid enthält.

7. Herstellungsverfahren gemäß Anspruch 2, wobei im Beschickungsschritt 2 die Beschickungsmischung, die die jeweiligen Komponenten enthält, derart hergestellt wird, dass die Verhältnisanteile an Alkalimetallhydroxid, Wasser und der dihalogenaromatischen Verbindung 0,950 bis 1,090 mol, 0,00 bis 2,00 mol bzw. 0,950 bis 1,200 mol pro mol der eingetragenen Schwefelquelle sind.

8. Herstellungsverfahren gemäß Anspruch 2, wobei im Beschickungsschritt 2 die Beschickungsmischung, die Wasser und die dihalogenaromatische Verbindung enthält, derart hergestellt wird, dass die Verhältnisanteile von Wasser und der dihalogenaromatischen Verbindung 0,90 bis 1,60 mol bzw. 1,000 bis 1,100 mol pro mol der eingetragenen Schwefelquelle sind.

9. Herstellungsverfahren gemäß Anspruch 2, wobei im Beschickungsschritt 2 die Beschickungsmischung derart hergestellt wird, dass der Verhältnisanteil des organischen Amidlösemittels in einen Bereich von 0,1 bis 10 kg pro mol der eingetragenen Schwefelquelle fällt.

10. Herstellungsverfahren gemäß Anspruch 2, wobei im Schritt 3 der ersten Polymerisationsstufe die polyhalogenaromatische Verbindung und das Phasentrennungsmittel zu dem Zeitpunkt, zu dem die Umwandlung der dihalogenaromatischen Verbindung 80 bis 98% erreicht hat, in die Polymerisationsreaktionsmischung gegeben werden.

11. Herstellungsverfahren gemäß Anspruch 2, wobei im Schritt 3 der ersten Polymerisationsstufe Wasser als das Phasentrennungsmittel zu dem Zeitpunkt, zu dem die Umwandlung der dihalogenaromatischen Verbindung wenigstens 80% erreicht hat, derart in die Polymerisationsreaktionsmischung gegeben wird, dass der Wassergehalt in der Polymerisationsreaktionsmischung höher als 2,00 mol, aber nicht höher als 10,00 mol pro mol der eingetragenen Schwefelquelle ist.

12. Herstellungsverfahren gemäß Anspruch 2, wobei im Schritt 3 der ersten Polymerisationsstufe die polyhalogenaromatische Verbindung und das Phasentrennungsmittel zur gleichen Zeit zu dem Zeitpunkt, zu dem die Umwandlung der dihalogenaromatischen Verbindung wenigstens 80% erreicht hat, in die Polymerisationsreaktionsmischung gegeben werden, oder die polyhalogenaromatische Verbindung zu dem Zeitpunkt, zu dem die Umwandlung der dihalogenaromatischen Verbindung wenigstens 80% erreicht hat, zugesetzt wird und das Phasentrennmittel dann zugesetzt wird, während die Umwandlung der dihalogenaromatischen Verbindung 95% erreicht.

**13.** Herstellungsverfahren gemäß Anspruch 2, wobei im Schritt 3 der ersten Polymerisationsstufe das Beschickungsgemisch auf eine Temperatur von 190 bis 235°C erwärmt wird, wodurch die Schwefelquelle und die dihalogenaromatische Verbindung der Polymerisationsreaktion in dem organischen Amidlösemittel, das Wasser enthält, unterworfen werden.

**14.** Herstellungsverfahren gemäß Anspruch 2, wobei im Erwärmungsschritt 4 die Polymerisationsreaktionsmischung mit einer Erwärmungsrate von 10 bis 60°C/Stunde erwärmt wird, um die Temperatur der Mischung auf eine Temperatur von nicht niedriger als 240°C, die von wenigstens der Polymerisationstemperatur in Schritt 3 der ersten Polymerisationsstufe zu höchstens 290°C reicht, zu erhöhen.

**15.** Herstellungsverfahren gemäß Anspruch 2, wobei im Erwärmungsschritt 4 die Polymerisationsreaktionsmischung mit einer Erwärmungsrate von 15 bis 55°C/Stunde erwärmt wird.

**16.** Herstellungsverfahren gemäß Anspruch 2, wobei in Schritt 5 der zweiten Polymerisationsstufe die Polymerisationsreaktion bei einer Temperatur von 245 bis 270°C fortgesetzt wird.

**17.** Herstellungsverfahren gemäß Anspruch 1, wobei ein Schritt des Zerkleinern des gebildeten Polymers bei Bedarf nach der Polymerisationsreaktion angeordnet ist, um ein verzweigtes Poly(arylensulfid)-Harz zu erhalten, das die folgenden Eigenschaften i bis iii hat:

i) eine Schmelzviskosität von 10,0 x $10^4$ bis 40,0 x $10^4$ Pa · s, wie sie bei einer Temperatur von 330°C und einer Scherrate von 2 $s^{-1}$ gemessen wird;
ii) einen durchschnittlichen Partikeldurchmesser von 50 bis 2000 $\mu$m und
iii) eine Schmelzviskoelastizität tan $\delta$ von 0,10 bis 0,30, wie sie bei einer Temperatur von 310°C und einer Winkelgeschwindigkeit von 1 rad/s gemessen wird.

**18.** Verzweigtes Poly(arylensulfid)-Harz, das die folgenden Eigenschaften i bis iii hat:

i) eine Schmelzviskosität von 10,0 x $10^4$ bis 40,0 x $10^4$ Pa · s, wie sie bei einer Temperatur von 330°C und einer Scherrate von 2 $s^{-1}$ gemessen wird;
ii) einen durchschnittlichen Partikeldurchmesser von 50 bis 2000 $\mu$m und
iii) eine Schmelzviskoelastizität tan $\delta$ von 0,10 bis 0,30, wie sie bei einer Temperatur von 310°C und einer Winkelgeschwindigkeit von 1 rad/s gemessen wird.

**19.** Verwendung des verzweigten Poly(arylensulfid)-Harzes gemäß Anspruch 18 als polymeres Modifizierungsmittel.

**20.** Verwendung gemäß Anspruch 19, wobei die Verwendung des verzweigten Poly(arylensulfid)-Harzes als polymeres Modifizierungsmittel eine Verwendung als Inhibitor des Auftretens einer Pressnaht für ein im Wesentlichen lineares geradkettiges Poly(arylensulfid)-Harz ist.

**Revendications**

**1.** Procédé de production d'une résine de poly(sulfure d'arylène) ramifiée par polymérisation d'une source de soufre et d'un composé dihalogéno-aromatique en présence d'un composé polyhalogéno-aromatique ayant 3 substituants halogène ou plus dans sa molécule dans un solvant amide organique, le procédé comprenant la soumission de la source de soufre et du composé dihalogéno-aromatique à une réaction de polymérisation à une température de 170 à 270 °C dans le solvant amide organique, l'addition du composé polyhalogéno-aromatique dans une quantité de 0,010 à 0,100 mole par mole de la source de soufre, et d'un agent de séparation de phase au mélange de réaction de polymérisation résultant à l'instant où la conversion du composé dihalogéno-aromatique a atteint au moins 80 %, puis le chauffage du mélange de réaction de polymérisation à une vitesse de chauffage de 10 à 60 °C/heure pour monter la température du mélange à au moins 240 °C, et la poursuite de la réaction de polymérisation à une température de 240 à 290 °C.

**2.** Procédé de production selon la revendication 1, qui comprend les étapes 1 à 5 suivantes :

(1) une étape de déshydratation 1 consistant à chauffer un mélange contenant le solvant amide organique, la source de soufre incluant un hydrosulfure de métal alcalin et un hydroxyde de métal alcalin pour décharger au moins une partie d'un distillat contenant de l'eau depuis l'intérieur du système contenant le mélange vers l'extérieur du système ;

(2) une étape de charge 2 consistant à mélanger le mélange restant dans le système après l'étape de déshydratation avec le composé dihalogéno-aromatique pour préparer un mélange de charge contenant le solvant amide organique, la source de soufre (ci-après désignée par « source de soufre chargée »), l'hydroxyde de métal alcalin, de l'eau et le composé dihalogéno-aromatique ;

(3) une étape de polymérisation de premier étage 3 consistant à chauffer le mélange de charge à une température de 170 à 270 °C, soumettant ainsi la source de soufre et le composé dihalogéno-aromatique à une réaction de polymérisation dans le solvant amide organique contenant de l'eau, et à ajouter le composé polyhalogéno-aromatique dans une quantité de 0,010 à 0,100 mole par mole de la source de soufre chargée, et un agent de séparation de phase au mélange de réaction de polymérisation résultant à l'instant où la conversion du composé dihalogéno-aromatique a atteint au moins 80 % ;

(4) une étape de chauffage 4 consistant à chauffer le mélange de réaction de polymérisation à une vitesse de chauffage de 10 à 60 °C/heure pour monter la température du mélange à au moins 240 °C ; .et

(5) une étape de polymérisation de second étage 5 consistant à poursuivre la réaction de polymérisation à une température de 240 à 290 °C.

3. Procédé de production selon la revendication 2, dans lequel dans l'étape de déshydratation 1, un mélange contenant le solvant amide organique, la source de soufre incluant un hydrosulfure de métal alcalin, et un hydroxyde de métal alcalin est chauffé à une température de 100 à 250 °C pour décharger au moins une partie d'un distillat contenant de l'eau de l'intérieur du système contenant le mélange vers l'extérieur du système.

4. Procédé de production selon la revendication 2, dans lequel dans l'étape de déshydratation 1, un mélange contenant le solvant amide organique, la source de soufre incluant un hydrosulfure de métal alcalin et un hydroxyde de métal alcalin dans une proportion de 0,900 à 1,050 mole par mole de la source de soufre est chauffé pour décharger au moins une partie d'un distillat contenant de l'eau de l'intérieur du système contenant le mélange vers l'extérieur du système.

5. Procédé de production selon la revendication 2, dans lequel dans l'étape de déshydratation 1, une déshydratation est conduite jusqu'à ce que la teneur en eau soit réduite à 0,00 à 2,00 moles par mole de la source de soufre (source de soufre chargée) restant dans le système.

6. Procédé de production selon la revendication 2, dans lequel dans l'étape de charge 2, la source de soufre chargée contient plus de 50 % en mole de l'hydrosulfure de métal alcalin et moins de 50 % en mole du sulfure de métal alcalin.

7. Procédé de production selon la revendication 2, dans lequel dans l'étape de charge 2, le mélange de charge contenant les composants respectifs est préparé de telle manière que les proportions de l'hydroxyde de métal alcalin, de l'eau et du composé dihalogéno-aromatique sont de 0,950 à 1,090 mole, 0,00 à 2,00 moles et 0,950 à 1,200 mole, respectivement, par mole de la source de soufre chargée.

8. Procédé de production selon la revendication 2, dans lequel dans l'étape de charge 2, le mélange de charge contenant de l'eau et le composé dihalogéno-aromatique est préparé de telle manière que les proportions de l'eau et du composé dihalogéno-aromatique sont de 0,90 à 1,60 mole et 1,000 à 1,100 mole, respectivement, par mole de la source de soufre chargée.

9. Procédé de production selon la revendication 2, dans lequel dans l'étape de charge 2, le mélange de charge est préparé de telle manière que la proportion du solvant amide organique entre dans une plage de 0,1 à 10 kg par mole de la source de soufre chargée.

10. Procédé de production selon la revendication 2, dans lequel dans l'étape de polymérisation de premier étage 3, le composé polyhalogéno-aromatique et l'agent de séparation de phase sont ajoutés dans le mélange de réaction de polymérisation à l'instant où la conversion du composé dihalogéno-aromatique a atteint 80 à 98 %.

11. Procédé de production selon la revendication 2, dans lequel dans l'étape de polymérisation de premier étage 3, de l'eau est ajoutée en tant qu'agent de séparation de phase dans le mélange de réaction de polymérisation à l'instant où la conversion du composé dihalogéno-aromatique a atteint au moins 80 % de telle manière que la teneur en eau dans le mélange de réaction de polymérisation est supérieure à 2,00 moles, mais non supérieure à 10,00 moles par mole de la source de soufre chargée.

12. Procédé de production selon la revendication 2, dans lequel dans l'étape de polymérisation de premier étage 3, le composé polyhalogéno-aromatique et l'agent de séparation de phase sont ajoutés en même temps dans le mélange de réaction de polymérisation à l'instant où la conversion du composé dihalogéno-aromatique a atteint au moins 80 %, ou bien le composé polyhalogéno-aromatique est ajouté à l'instant où la conversion du composé dihalogéno-aromatique a atteint au moins 80 %, et l'agent de séparation de phase est ensuite ajouté alors que la conversion du composé dihalogéno-aromatique atteint 95 %.

13. Procédé de production selon la revendication 2, dans lequel dans l'étape de polymérisation de premier étage 3, le mélange de charge est chauffé à une température de 190 à 235 °C, soumettant ainsi la source de soufre et le composé dihalogéno-aromatique à la réaction de polymérisation dans le solvant amide organique contenant de l'eau.

14. Procédé de production selon la revendication 2, dans lequel dans l'étape de chauffage 4, le mélange de réaction de polymérisation est chauffé à une vitesse de chauffage de 10 à 60 °C/heure pour monter la température du mélange à une température non inférieure à 240 °C allant d'au moins la température de polymérisation dans l'étape de polymérisation de premier étage 3 à au plus 290 °C.

15. Procédé de production selon la revendication 2, dans lequel dans l'étape de chauffage 4, le mélange de réaction de polymérisation est chauffé à une vitesse de chauffage de 15 à 55 °C/heure.

16. Procédé de production selon la revendication 2, dans lequel dans l'étape de polymérisation de second étage 5, la réaction de polymérisation est poursuivie à une température de 245 à 270 °C.

17. Procédé de production selon la revendication 1, dans lequel une étape de broyage du polymère formé est prévue au besoin après la réaction de polymérisation pour obtenir une résine de poly(sulfure d'arylène) ramifiée ayant les propriétés i à iii suivantes :

i) une viscosité en fusion de 10,0 x $10^4$ à 40,0 x $10^4$ Pa.s telle que mesurée à une température de 330 °C et une vitesse de cisaillement de 2 $s^{-1}$ ;
ii) un diamètre moyen de particule de 50 à 2 000 $\mu$m ; et
iii) une viscoélasticité en fusion tan $\delta$ de 0,10 à 0,30 telle que mesurée à une température de 310 °C et une vitesse angulaire de 1 rad/s.

18. Résine de poly(sulfure d'arylène) ramifiée ayant les propriétés i à iii suivantes :

i) une viscosité en fusion de 10,0 x $10^4$ à 40,0 x $10^4$ Pa.s telle que mesurée à une température de 330 °C et une vitesse de cisaillement de 2 $s^{-1}$ ;
ii) un diamètre moyen de particule de 50 à 2 000 $\mu$m ; et
iii) une viscoélasticité en fusion tan $\delta$ de 0,10 à 0,30 telle que mesurée à une température de 310 °C et une vitesse angulaire de 1 rad/s.

19. Utilisation de la résine de poly(sulfure d'arylène) ramifiée selon la revendication 18 en tant que modificateur polymérique.

20. Utilisation selon la revendication 19, dans laquelle l'utilisation de la résine de poly(sulfure d'arylène) ramifiée en tant que modificateur polymérique est une utilisation en tant qu'inhibiteur de l'apparition de bavure pour une résine de poly(sulfure d'arylène) à chaîne droite sensiblement linéaire.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 649266 A
- US 4956499 A
- JP 1299826 A
- US 5200500 A
- US 5268451 A